# EUROPÄISCHE PATENTSCHRIFT

(11) **EP 3 872 261 B1**
(45) Veröffentlichungstag und Bekanntmachung des Hinweises auf die Patenterteilung: **22.03.2023**
(21) Anmeldenummer: 21158415.6
(22) Anmeldetag: 22.02.2021
(51) Int. Cl.: E01C 23/088

(54) **BODENBEARBEITUNGSMASCHINE UND TRAGSTRUKTUR MIT FORMSCHLUSS ZWISCHEN ROTIERENDER ARBEITSBAUGRUPPE UND DESSEN DREHLAGER**
SOIL WORKING MACHINE AND SUPPORT STRUCTURE WITH POSITIVE CONNECTION BETWEEN ROTATING WORKING ASSEMBLY AND ITS ROTARY BEARING
MACHINE DE TRAITEMENT DU SOL ET STRUCTURE DE SUPPORT À LIAISON PAR COMPLÉMENTARITÉ DE FORME ENTRE LE MODULE DE TRAVAIL ROTATIF ET SON COUSSINET DE PIVOTEMENT

(30) Priorität: 28.02.2020 DE 102020105391
(43) Veröffentlichungstag der Anmeldung: 01.09.2021
(73) Patentinhaber: Wirtgen GmbH, 53578 Windhagen (DE)
(72) Erfinder: Wilhelmi, Hardy, 53547 Dattenberg (DE); Buhr, Karsten, 56594 Willroth (DE); Salz, Andreas, 53577 Neustadt (Wied) (DE); Spöth, Sascha, 65558 Heistenbach (DE)
(74) Vertreter: Ruttensperger Lachnit Trossin Gomoll

(56) Entgegenhaltungen:
- EP-A1- 2 350 391
- EP-A1- 3 406 798
- DE-A1- 19 932 396

## Beschreibung

Die vorliegende Erfindung betrifft eine Bodenbearbeitungsmaschine, wie etwa Straßenfräse, Recycler, Stabilisierer oder Surface-Miner, umfassend eine Tragstruktur und eine zur Bodenbearbeitung um eine Antriebsachse relativ zur Tragstruktur drehbar an der Tragstruktur gelagerte Arbeitsbaugruppe, wobei die Antriebsachse eine längs der Antriebsachse verlaufende axiale Richtung, eine orthogonal dazu verlaufende radiale Richtung und eine um die Antriebsachse umlaufende Umfangsrichtung definiert, wobei in einem für eine Drehung der Arbeitsbaugruppe um die Antriebsachse bereiten Bezugszustand die Arbeitsbaugruppe an einem Antriebsaxialendbereich mittels eines ersten Drehlagers drehbar an einem ersten Tragstrukturbereich gelagert ist und an einem in axialer Richtung vom Antriebsaxialendbereich entfernt gelegenen Sicherungsaxialendbereich mittels einer Drehlageranordnung drehbar an einem zweiten Tragstrukturbereich gelagert ist, wobei die Drehlageranordnung ein zweites Drehlager, eine mit der Arbeitsbaugruppe verbundene baugruppenseitige Lagerformation und eine mit der Tragstruktur verbundene strukturseitige Lagerformation aufweist, wobei der Sicherungsaxialendbereich als die baugruppenseitige Lagerformation eine Formation aus Lagerzapfen und Lagerhülse aufweist und wobei der zweite Tragstrukturbereich als die strukturseitige Lagerformation die jeweils andere Formation aus Lagerzapfen und Lagerhülse aufweist, wobei im Bezugszustand die Lagerhülse den Lagerzapfen umgibt, wobei sowohl der Lagerzapfen als auch die Lagerhülse im Bezugszustand relativ zum zweiten Tragstrukturbereich um die Antriebsachse drehbar angeordnet sind, und wobei der Lagerzapfen und die Lagerhülse zu Wartungs-, Umrüst- und Montagezwecken bestimmungsgemäß axial voneinander entfernbar und dadurch voneinander trennbar sind.

Eine gattungsgemäße Bodenbearbeitungsmaschine in Gestalt einer Straßenfräse ist aus der EP 3406798 A1 bekannt.

Der zweite Tragstrukturbereich der bekannten Bodenbearbeitungsmaschine ist als Wartungsklappe oder Wartungstüre des Fräswalzenkastens um eine im Wesentlichen zur Gierachse der Bodenbearbeitungsmaschine parallele Schwenkachse schwenkbar, um durch Verschwenken der Wartungstüre eine Zugänglichkeit einer im Fräswalzenkasten aufgenommenen Fräswalze oder einer sie tragenden Antriebsformation als Bestandteile einer bekannten Arbeitsbaugruppe zu erreichen. Die Fräswalze kann bei geöffneter Wartungstüre axial von der sie tragenden Antriebsformation abgezogen und beispielsweise durch eine andere Fräswalze ersetzt werden.

Der Lagerzapfen und die Lagerhülse sind derart gestaltet, dass beim Öffnen der Wartungstüre die strukturseitige Lagerformation, im bekannten Fall eine Lagerhülse, von der baugruppenseitigen Lagerformation, im bekannten Fall ein Lagerzapfen, mit der Schwenkbewegung der Wartungstüre axial abgezogen wird. Aufgrund der Schwenkbewegung ist die Abziehbewegung der Lagerhülse vom Lagerzapfen keine reine axiale Relativbewegung, sondern der überwiegend axialen translatorischen Komponente der Abziehbewegung ist eine betragsmäßig geringere radiale translatorische und eine rotatorische Bewegungskomponente der Lagerhülse überlagert.

Aufgrund der vorteilhaft einfachen und schnellen Trennbarkeit der strukturseitigen und der baugruppenseitigen Lagerformation der Drehlageranordnung sind die genannten Lagerformationen im Bezugszustand nur reibschlüssig miteinander zur gemeinsamen Drehbewegung um die Antriebsachse gekoppelt. Im Bodenbearbeitungsbetrieb der Bodenbearbeitungsmaschine können in bestimmten Betriebssituationen mit kurzzeitig erhöhter radialer Last der Drehlagerung der Arbeitsbaugruppe, etwa beim Anfahren der Arbeitsbaugruppe oder/und beim Ansetzen der Arbeitsbaugruppe an den zu bearbeitenden Boden oder/und beim Verändern einer Eingriffstiefe der Arbeitsbaugruppe orthogonal zur Antriebsachse, so hohe Belastungen an der Drehlageranordnung auftreten, dass es zu einer unerwünschten Relativdrehung der strukturseitigen und der baugruppenseitigen Lagerformation relativ zueinander kommt. Die derart auftretende Relativdrehung kann an wenigstens einer der Lagerformationen unerwünscht erhöhten Verschleiß bewirken.

Es ist daher Aufgabe der vorliegenden Erfindung, die Lagerung der Arbeitsbaugruppe an der Drehlageranordnung mit den voneinander bestimmungsgemäß trennbaren Lagerformationen zu verbessern und hierdurch möglichen erhöhten Verschleiß zu vermeiden.

Die vorliegende Erfindung löst diese Aufgabe an einer Bodenbearbeitungsmaschine der eingangs genannten Art dadurch, dass die Arbeitsbaugruppe eine Mitnehmerformation mit einer in einer ersten Umfangsrichtung um die Antriebsachse weisenden Mitnehmerfläche aufweist und dass die strukturseitige Lagerformation eine Mitnehmergegenformation mit einer in einer zur ersten entgegengesetzten zweiten Umfangsrichtung um die Antriebsachse weisenden Mitnehmergegenfläche aufweist, wobei sich im Bezugszustand die Bewegungsräume der Mitnehmerfläche und der Mitnehmergegenfläche um die Antriebsachse überlappen.

Die Tragstruktur ist bevorzugt eine die Arbeitsbaugruppe an mehreren Seiten umgebende Hülle, wie etwa ein an sich bekannter Fräswalzenkasten, welcher eine Fräswalze oder wenigstens eine zur bestimmungsgemäß lösbaren Kopplung mit einer Fräswalze ausgebildete Antriebsformation um die Antriebsachse drehbar gelagert aufweist. Die Tragstruktur kann grundsätzlich jedoch jede beliebige Struktur sein, welche das erste Drehlager und die Drehlageranordnung trägt.

Die vorliegende Erfindung wird, sofern nicht ausdrücklich im Einzelfall etwas Abweichendes ausgesagt ist, in dem eingangs definierten Bezugszustand beschrieben, in welchem die Arbeitsbaugruppe zur Drehung um die Antriebsachse bereit ist.

Die Wartungs-, Umrüst- und Montagezwecke, zu welchen der Lagerzapfen und die Lagerhülse axial vorrangig voneinander entfernbar sind, betreffen eine Wartung oder/ und Umrüstung oder/und eine Montage anderer Bauteile als des zweiten Drehlagers der Drehlageranordnung. Das zweite Drehlager kann ein Wälzlager oder ein Gleitlager umfassen oder sein. Oben bereits angegeben, betreffen die Wartungs-, Umrüst- und Montagezwecke Arbeiten an der Arbeitsbaugruppe, etwa die Demontage einer Fräswalze von einer Antriebsformation oder/und die Montage einer Fräswalze auf eine Antriebsformation.

Durch die Anordnung der genannten Mitnehmerformation und Mitnehmergegenformation mit in entgegengesetzte Umfangsrichtung um die Antriebsachse weisenden Flächen: Mitnehmerfläche und Mitnehmergegenfläche, deren um die Antriebsachse verlaufenden Bewegungsräume sich überlappen, können die Mitnehmerfläche und die Mitnehmergegenfläche, und folglich die Mitnehmerformation und die Mitnehmergegenformation, einander längs einer Umfangsbahn um die Antriebsachse nicht passieren. Somit ist selbst dann, wenn die Mitnehmerfläche und die Mitnehmergegenfläche beim Verbinden der strukturseitigen und der baugruppenseitigen Lagerformation der Drehlageranordnung in Umfangsrichtung um die Antriebsachse maximal weit voneinander entfernt liegen, nur eine Relativdrehung der beiden Lagerformationen von weniger als einer ganzen Umdrehung möglich, bis die Mitnehmerfläche in Anlageeingriff mit der Mitnehmergegenfläche gelangt und die Lagerformationen der Drehlageranordnung durch den so erzielten Formschlusseingriff synchron und ohne Relativdrehung um die Antriebsachse drehen. Sollte eine Relativdrehung von weniger als 360° gewünscht sein, können über den Umfang verteilt mehrere Mitnehmerformationen und/oder Mitnehmergegenformationen vorgesehen sein. Zur Sicherstellung einer einheitlichen Belastung der Formationen können gemäß einer Weiterbildung der vorliegenden Erfindung ebenso viele Mitnehmerformationen wie Mitnehmergegenformationen angeordnet sein. Bevorzugt ist eine Mehrzahl von Mitnehmerformationen oder/und Mitnehmergegenformationen in Umfangsrichtung äquidistant um die Antriebsachse verteilt angeordnet, sodass bei der Herstellung des Bezugszustands nicht auf die Relativorientierung der Mitnehmerformationen und Mitnehmergegenformationen relativ zueinander geachtet zu werden braucht. Aus Gründen der bevorzugten äquidistanten Anordnung ist der Winkelabstand zwischen zwei benachbarten Mitnehmerformationen bzw. Mitnehmergegenformationen ein ganzzahliger Bruchteil von 360°.

Der Bewegungsraum einer Fläche ist dabei jener Raum, welcher von einer Fläche: Mitnehmerfläche oder Mitnehmergegenfläche, während einer Drehung um die Antriebsachse durchlaufen wird.

Da in der Regel der Pfad des Antriebsdrehmoments von Arbeitsbaugruppe zur strukturseitigen Lagerformation verläuft und da weiter die Arbeitsbaugruppe in der Regel nur in einem Drehsinn zur Drehung antreibbar ist, ist die erste Umfangsrichtung, in welcher die Mitnehmerfläche weist, die Umfangsrichtung, in welche die Arbeitsbaugruppe zur Drehung antreibbar ist.

Die Bodenbearbeitungsmaschine weist als Drehantrieb der Arbeitsbaugruppe bevorzugt einen Antriebsmotor auf, von welchem ausgehend ein Antriebsdrehmoment auf die Arbeitsbaugruppe übertragbar ist. Zum Antrieb der Arbeitsbaugruppe mit einer geeigneten Drehzahl oder einem geeigneten Drehzahlbereich kann im DrehmomentÜbertragungspfad vom Antriebsmotor bis zur Arbeitsbaugruppe wenigstens ein Getriebe, insbesondere Planetengetriebe, vorgesehen sein. Der Antriebsstrang vom Antriebsmotor bis zur Arbeitsbaugruppe kann ein Zugmittelgetriebe, insbesondere einen Riementrieb, und das genannte Planetengetriebe aufweisen, aus Bauraumerwägungen bevorzugt in der genannten Reihenfolge längs des Drehmoment-Übertragungspfads. Zur Bereitstellung von ausreichend hydraulischer Energie kann im Antriebsstrang zusätzlich ein Pumpenverteilergetriebe angeordnet sein, bevorzugt zwischen Antriebsmotor und Zugmittelgetriebe. Das im Drehmoment-Übertragungspfad vom Antriebsmotor bis zur Arbeitsbaugruppe letzte Getriebe, insbesondere das oben genannte Planetengetriebe, kann wenigstens abschnittsweise in einer dauerhaft mittels des ersten Drehlagers der Tragstruktur drehbar gelagerten Antriebsformation angeordnet sein.

Das Getriebe selbst kann als Planetengetriebe das erste Drehlager aufweisen. Ein erster Teil des Getriebegehäuses kann ortsfest an der Tragstruktur festgelegt sein und ein zweiter Teil des Getriebegehäuses kann relativ zum ersten Getriebegehäuseteil um die Antriebsachse drehbar am ersten Getriebegehäuseteil gelagert sein. Der zweite Getriebegehäuseteil kann drehfest mit der Antriebsformation gekoppelt oder/und Teil der Antriebsformation sein.

Das erste Drehlager ist daher bevorzugt ein sogenanntes Festlager der Drehlagerung der Arbeitsbaugruppe. Als Festlager weist das erste Drehlager kein axiales Bewegungsspiel relativ zu den mit ihm verbundenen Komponenten: erster Tragstrukturbereich und Arbeitsbaugruppe, auf. Das Festlager bleibt an der Bodenbearbeitungsmaschine bzw. an der Tragstruktur mit Ausnahme von unvermeidlichem Verschleiß über seine Betriebslebensdauer hinweg in der Regel unverändert. Die Drehlageranordnung bildet dagegen ein Loslager der Drehlagerung der Arbeitsbaugruppe, welches bestimmungsgemäß eine axiale Relativbewegung zwischen dem zweiten Tragstrukturbereich und der Arbeitsbaugruppe zulässt. Die Drehlageranordnung ist sogar bestimmungsgemäß zur wiederholten Trennung und erneuten Verbindung seiner oben genannten Lagerformationen ausgebildet.

Bevorzugt ist die strukturseitige Lagerformation die Lagerhülse. Um die Bauteilanzahl gering zu halten, kann die Lagerhülse grundsätzlich der Innenring des bevorzugt als Wälzlager ausgebildeten zweiten Drehlagers sein, wenngleich dies aufgrund der hohen Härte und der damit verbundenen schlechten Bearbeitbarkeit eines Wälzlager-Innenrings nicht bevorzugt ist. Bevorzugt ist die strukturseitige Lagerformation eine von einem Innenring des bevorzugt als Wälzlager ausgebildeten zweiten Drehlagers mittelbar oder unmittelbar getragene Lagerhülse. Da die Lagerhülse bevorzugt durch eine Schwenkbewegung des zweiten Tragstrukturbereichs auf den die baugruppenseitige Lagerformation bildenden Lagerzapfen aufschiebbar und von diesem abziehbar sein soll, ist die Lagerhülse vorzugsweise mit einer sich in Richtung vom Antriebsaxialendbereich weg verjüngenden Ausnehmung ausgebildet. Die Lagerhülse ist somit bevorzugt grob trichterförmig. Aus denselben Gründen ist der folglich bevorzugt die baugruppenseitige Lagerformation bildende Lagerzapfen vorzugsweise zu seinem auskragenden Längsende hin sich verjüngend ausgebildet.

Das zweite Drehlager ist funktionell bevorzugt zwischen dem zweiten Tragstrukturbereich einerseits und den beiden Lagerformationen andererseits angeordnet, sodass beide Lagerformationen relativ zum zweiten Tragstrukturbereich drehbar sind.

Um während einer Bodenbearbeitung zwischen der Mitnehmerformation und der Mitnehmergegenformation unerwünschte Nebenkräfte mit Komponenten orthogonal zu einer einen Berührbereich von Mitnehmerfläche und Mitnehmergegenfläche durchsetzenden virtuellen Umfangskreisbahn vermeiden zu können, ist bevorzugt wenigstens eine Fläche aus Mitnehmerfläche und Mitnehmergegenfläche eben ausgebildet. Die ebene Fläche liegt bevorzugt in einer die Antriebsachse enthaltenden Ebene, sodass sie während einer Drehung um die Antriebsachse zu jeder Zeit orthogonal zu ihrer Bewegungsbahn orientiert ist. Die jeweils andere Fläche aus Mitnehmerfläche und Mitnehmergegenfläche kann eine an der ebenen Fläche aufliegende konvex gekrümmte Gestalt aufweisen, etwa als Kugelkalotte oder Ellipsoidkalotte, oder, und dies ist sowohl aus Gründen einfacher Fertigung als auch möglichst niedriger Flächenpressung bevorzugt, kann ebenfalls eben sein. Zur Vermeidung unerwünschter hoher Belastungen durch Flächenpressungen an der Berührstelle zwischen Mitnehmerfläche und Mitnehmergegenfläche liegen die Mitnehmerfläche und die Mitnehmergegenfläche im Anlageeingriff bevorzugt flächig aneinander an, sind also im Anlageeingriff parallel zueinander. Daher liegt bevorzugt auch die jeweils andere ebene Fläche aus Mitnehmerfläche und Mitnehmergegenfläche in einer die Antriebsachse enthaltenden Ebene.

Wenngleich also unmittelbar nach Herstellung einer Verbindung der Lagerformationen miteinander längs einer Umfangskreisbahn um die Antriebsachse ein Abstand zwischen der Mitnehmerfläche und der Mitnehmergegenfläche bestehen kann, so ist eine Betriebssituation bevorzugt, bei welcher die Mitnehmerfläche und die Mitnehmergegenfläche sich in einem in Umfangsrichtung Kraft übertragenden Anlageeingriff befinden. So sie nicht von vornherein besteht, stellt sich diese Betriebssituation vorliegend dann, wenn es zu einer Relativdrehung zwischen den genannten Lagerformationen kommt, vorteilhaft von alleine ein.

Zur sicheren Herstellung des oben beschriebenen Drehmoment übertragenden Anlageeingriffs zwischen der Mitnehmerfläche und der Mitnehmergegenfläche kann die Mitnehmergegenformation eine Einsenkung aufweisen, in welche ein Vorsprung der Mitnehmerformation eingreift. Alternativ kann die Mitnehmergegenformation einen Vorsprung aufweisen, welcher in Anlageeingriff mit einem Vorsprung oder einer Einsenkung der Mitnehmerformation steht oder bringbar ist. Weiter alternativ kann die Mitnehmergegenformation sowohl eine Einsenkung als auch einen Vorsprung aufweisen, etwa dann, wenn die Mitnehmergegenfläche an einem gesonderten Vorsprungsbauteil ausgebildet ist, welches in eine Einsenkung der strukturseitigen Lagerformation eingesetzt ist, um das Vorsprungsbauteil mit der Mitnehmergegenfläche möglichst dauerhaft und ortsfest an der strukturseitigen Lagerformation zu verankern. Das Vorsprungsbauteil mit der Mitnehmergegenfläche kann dann aus der Einsenkung heraus über die umgebende Oberfläche der Lagerformation hinaus vorstehen.

Die Mitnehmergegenformation als Vorsprung oder Einsenkung kann einstückig mit der strukturseitigen Lagerformation zusammenhängend ausgebildet sein, beispielsweise durch urformende Herstellung mit gegebenenfalls anschließender Nachbearbeitung oder als Einsenkung auch nur durch entsprechende spanabhebende Bearbeitung. Flexibler und vor allem für eine Nachrüstung geeigneter kann die Mitnehmergegenformation als Vorsprungsbauteil mit der Lagerformation durch einen Fügevorgang verbunden sein. So kann die Mitnehmergegenformation mit der Lagerformation stoffschlüssig, insbesondere durch Schweißen, gegebenenfalls auch durch Löten oder Kleben, verbunden sein, was zu einer sehr hohen Verbindungsfestigkeit führt. Alternativ kann ein die Mitnehmergegenformation bildendes oder von der Mitnehmergegenformation umfasstes Vorsprungsbauteil, welches die Mitnehmergegenfläche aufweist, bestimmungsgemäß lösbar mit der Lagerformation verbunden sein, beispielsweise durch Verschrauben, sodass das die Mitnehmergegenfläche aufweisende Vorsprungsbauteil bei Erreichen eines vorbestimmten Verschleißzustandes gegen ein unverschlissenes Vorsprungsbauteil austauschbar ist.

Ein hohes übertragbares Drehmoment bei gleichzeitig einfacher Austauschbarkeit der Mitnehmergegenfläche kann dadurch erhalten werden, dass die Mitnehmergegenformation einen Vorsprung, insbesondere ein Vorsprungsbauteil, aufweist, welcher bzw. welches in eine Einsenkung in der strukturseitigen Lagerformation eingesetzt und dort bestimmungsgemäß lösbar festgelegt ist. Bevorzugt ist der Vorsprung bzw. das Vorsprungsbauteil in einer festen, aber gleichzeitig lösbaren Verbindung durch Schrauben mit der strukturseitigen Lagerformation verbunden.

Das oben zur Mitnehmergegenformation Gesagte trifft mutatis mutandis auch auf die Mitnehmerformation zu. Auch diese kann einen Vorsprung oder/und eine Einsenkung umfassen. Dem entsprechend kann auch die Mitnehmerformation ein Vorsprungsbauteil umfassen, welches in einer Einsenkung des sie tragenden Bauteils aufgenommen ist, um ein möglichst hohes Drehmoment von der - üblicherweise antreibenden - Mitnehmerformation zu der - üblicherweise angetriebenen - Mitnehmergegenformation übertragen zu können.

Auch die Mitnehmerformation kann mit dem sie tragenden Bauteil bestimmungsgemäß lösbar, also etwa durch eine Verschraubung, oder bestimmungsgemäß unlösbar, also etwa durch Verschweißen, Verlöten, Verkleben und dergleichen, verbunden sein.

Ein wesentlicher Unterschied zwischen der Mitnehmerformation und der Mitnehmergegenformation liegt darin, dass die Mitnehmergegenformation an der strukturseitigen Lagerformation angeordnet ist, um diese synchron mit der Arbeitsbaugruppe zu drehen, wohingegen die Mitnehmerformation jedoch nicht notwendigerweise an der baugruppenseitigen Lagerformation angeordnet sein muss, sondern an einer beliebigen geeigneten Stelle der Arbeitsbaugruppe zur gemeinsamen Bewegung mit dieser angeordnet sein kann. Selbstverständlich kann die Mitnehmerformation an der baugruppenseitigen Lagerformation angeordnet sein.

Wie oben bereits dargelegt wurde, kann die Arbeitsbaugruppe eine Antriebsformation aufweisen, welche am Antriebsaxialendbereich mittels des ersten Drehlagers um die Antriebsachse drehbar am ersten Tragstrukturbereich gelagert ist und vom ersten Tragstrukturbereich weg axial auskragt. Auf die Antriebsformation kann axial von der Seite des Sicherungsaxialendbereichs her eine Arbeitsvorrichtung, wie etwa eine Fräswalze, aufgeschoben und zur gemeinsamen Drehung mit der Antriebsformation verbunden werden. Ebenso kann die Arbeitsvorrichtung von der Antriebsformation in entgegengesetzter Richtung axial abgezogen oder abgedrückt werden.

Die Arbeitsbaugruppe kann nur die Antriebsformation aufweisen.

Da die Antriebsformation dauerhaft am ersten Tragstrukturbereich drehbar gelagert ist, ist es vorteilhaft, wenn die Antriebsformation die Mitnehmerformation trägt. So ist die Mitnehmerformation stets an der Tragstruktur und damit an der sie aufweisenden Bodenbearbeitungsmaschine vorhanden.

Üblicherweise ist im Bezugszustand der zweite Tragstrukturbereich axial mit Abstand von dem vom ersten Tragstrukturbereich auskragenden Längsende der Antriebsformation angeordnet. Um mit geringem baulichen Aufwand sicherstellen zu können, dass die Mitnehmerfläche einer an der Antriebsformation angeordneten Mitnehmerformation mit der Mitnehmergegenfläche der strukturseitigen Lagerformation in Drehmoment übertragenden Eingriff gelangen kann, ist es vorteilhaft, wenn die Antriebsformation an ihrem vom ersten Drehlager fernliegenden Längsende eine in axiale Richtung weisende Stirnfläche aufweist, wobei die Stirnfläche die Mitnehmerformation trägt. Zum einen stellt eine solche Stirnfläche eine ausreichend große Fläche zur Anordnung einer Mitnehmerformation bereit. Zum anderen kann die Stirnfläche bzw. ein die Stirnfläche aufweisendes Stirnflächenbauteil mit ausreichender Festigkeit zur Übertragung der erforderlichen Drehmomente ausgebildet sein.

Die Stirnfläche ist bevorzugt orthogonal zur Antriebsachse angeordnet, jedoch muss dies nicht so sein. Die in axiale Richtung weisende Stirnfläche kann ebenso von der Antriebsachse nach radial außen gestuft oder/und konisch ausgebildet sein, wobei bevorzugt der halbe Öffnungswinkel des Stirnflächenkonus größer als 45° ist, um zu vermeiden, dass die Stirnfläche eine zu große axiale Erstreckung aufweist. Auch dann weist die Stirnfläche immer noch überwiegend in axiale Richtung.

Die Antriebsformation kann einen Rohrabschnitt, insbesondere einen zylindrischen Abschnitt, aufweisen, dessen Rohr- bzw. Zylinderachse die Antriebsachse ist. In wenigstens einem Teil dieses Rohrabschnitts, vorzugsweise in einem dem ersten Tragstrukturbereich näher als dem zweiten Tragstrukturbereich gelegenen Rohrabschnitt kann wenigstens ein Teil des oben genannten Getriebes angeordnet sein.

Der zylindrische Abschnitt kann an seinem vom ersten Drehlager fernliegenden auskragenden Längsende durch ein Stirnflächenbauteil teilweise oder bevorzugt ganz abgedeckt sein, sodass die Antriebsformation bevorzugt eine topfartige Formation umfasst, deren Boden durch das Stirnflächenbauteil gebildet ist.

Wie bereits oben dargelegt wurde, ist die Antriebsformation zur Erfüllung unterschiedlicher Arbeitsaufgaben bevorzugt zur bestimmungsgemäß lösbaren Aufnahme einer Fräswalze ausgebildet. So kann die Antriebsformation zeitlich nacheinander eine Mehrzahl von Fräswalzen aufnehmen, welche sich hinsichtlich Art oder/und Anzahl oder/und Anordnung von daran angeordneten Bodenmaterial abhebenden Fräsmeißeln unterscheiden. Somit kann die Arbeitsbaugruppe die Arbeitsformation und die Fräswalze umfassen.

Um eine Relativdrehung zwischen Antriebsformation und von dieser aufgenommener Fräswalze zu vermeiden, weist die Antriebsformation bevorzugt vorspringende Übertragungsbauteile auf, welche zur körperlichen Drehmomentübertragung auf eine an der Antriebsformation angeordnete Fräswalze ausgebildet sind. Üblicherweise wird am Antriebsaxialendbereich Drehmoment von einem Antriebsmotor der Bodenbearbeitungsmaschine in die Antriebsformation eingeleitet. Dann, wenn die Fräswalze an der Antriebsformation angeordnet ist und die Arbeitsbaugruppe sowohl die Antriebsformation als auch die Fräswalze aufweist, verläuft der Drehmoment-Übertragungspfad innerhalb der Arbeitsgruppe von der Antriebsformation zur Fräswalze.

Um die Anzahl an Bauteilen der Arbeitsgruppe möglichst gering zu halten, weist bevorzugt wenigstens eines der Übertragungsbauteile die Mitnehmerformation auf.

Im Bezugszustand, insbesondere in einem zur Bodenbearbeitung bereiten Bezugszustand, sind eine an der Antriebsformation aufgenommene Fräswalze und die Antriebsformation koaxial angeordnet. Die Fräswalze umfasst einen Fräswalzenmantel, welcher die Antriebsformation radial außen umgibt. Zur möglichst einfachen und sicheren Übertragung von Drehmoment von der Antriebsformation zur Fräswalze überragt die Fräswalze bevorzugt die Antriebsformation an dem vom Antriebsaxialendbereich fernliegenden Längsende der Antriebsformation.

Dann, wenn das erste Drehlager zwischen den oben genannten zwei Getriebegehäuseteilen angeordnet ist, kann die Fräswalze zur Erzielung einer großen axialen Arbeitsbreite das erste Drehlager radial außen umgeben und axial in Richtung vom Sicherungsaxialendbereich weg überragen.

An der Außenseite des Fräswalzenmantels ist eine Mehrzahl von Fräsmeißelhaltern angeordnet sind, welche dazu ausgebildet sind, Fräsmeißel aufzunehmen. Bevorzugt sind die Fräsmeißelhalter als Fräsmeißelwechselhalter mit einem am Fräswalzenmantel dauerhaft angeordneten mantelseitigen Halterbauteil und mit einem bestimmungsgemäß lösbar mit diesem verbindbaren Halter-Wechselbauteil ausgebildet. Wegen der hohen Verschleißbeanspruchung von Fräsmeißeln im Bodenbearbeitungsbetrieb sind auch die Fräsmeißel bevorzugt austauschbar in dem jeweiligen Fräsmeißelhalter angeordnet. Die Fräsmeißelhalter sind zur Unterstützung der Förderung von abgetragenem Bodenmaterial von der Arbeitsbaugruppe weg bevorzugt wendelförmig am Fräswalzenmantel angeordnet.

Die Fräswalze ist bevorzugt an ihrem dem Antriebsaxialendbereich näher gelegenen Längsende an der Antriebsformation abgestützt. Dies ist dort besonders einfach und stabil möglich, da die Antriebsformation im Antriebsaxialendbereich am ersten Tragstrukturbereich gelagert ist und somit dort wegen der geringen axialen Auskraglänge vom ersten Tragstrukturbereich eine hohe Abstützsteifigkeit aufweist. Zur erneuten Abstützung der Fräswalze an der Antriebsformation mit axialem Abstand von der erstgenannten Abstützung kann die Fräswalze im Sicherungsaxialendbereich bevorzugt eine quer zur Antriebsachse verlaufende Verbindungsstruktur aufweisen. Bevorzugt liegt die Verbindungsstruktur im Bezugszustand zur oben genannten Stirnfläche axial benachbart, sodass ein vorteilhafter, möglichst großer Lagerabstand zwischen den beiden Abstützstellen der Fräswalze möglich ist. Die Stirnfläche der Antriebsformation kann beispielsweise einen axial auskragenden Zentrierzapfen aufweisen, an welchem die Fräswalze über die Verbindungsstruktur formschlüssig zentriert abgestützt ist.

Die oben genannte von der Antriebsformation getragene Mitnehmerformation kann sich axial an der Verbindungsstruktur vorbei oder durch die Verbindungsstruktur hindurch erstrecken und so über die Verbindungsstruktur hinaus zur strukturseitigen Lagerformation vorstehen. Bevorzugt ist die sich an der Verbindungsstruktur vorbei oder durch diese hindurch erstreckende Mitnehmerformation an dem oben genannten Übertragungsbauteil ausgebildet. So kann ein sich axial mit der Verbindungsstruktur überlappender Abschnitt des Übertragungsbauteils Drehmoment von der Antriebsformation auf die Fräswalze übertragen und kann ein sich axial über die Verbindungsstruktur hinaus zum zweiten Tragstrukturbereich hin erstreckender Abschnitt des Übertragungsbauteils die Mitnehmerformation bilden und Drehmoment auf die strukturseitige Lagerformation übertragen. Bevorzugt ist die Mitnehmerformation ein axialer Endbereich eines von der Antriebsformation axial auskragenden Übertragungsbauteils. Ein solches Übertragungsbauteil kann beispielsweise durch einen auskragenden Bolzen oder Zapfen realisiert sein. Auch dieses Übertragungsbauteil, und damit verbunden die Mitnehmerformation, ist bevorzugt an der Antriebsformation bestimmungsgemäß lösbar angeordnet, etwa durch eine Schraube, insbesondere eine das Übertragungsbauteil zentral durchsetzende Schraube.

Zusätzlich oder alternativ zur Antriebsformation kann die Fräswalze die Mitnehmerformation tragen. Da die Fräswalze als gesonderte Baueinheit mit der Antriebsformation verbindbar und von dieser lösbar ist, betrifft die vorliegenden Anmeldung auch eine Fräswalze, wie sie in dieser Anmeldung beschrieben und weitergebildet ist, mit einer Mitnehmerformation.

Dann, wenn die Fräswalze die Mitnehmerformation trägt, oder wenigstens auch eine Mitnehmerformation trägt, kann die Mitnehmerformation an der oben genannten Verbindungsstruktur angeordnet sein. Die wie oben beschrieben bevorzugt quer, besonders bevorzugt orthogonal, zur Antriebsachse verlaufende Verbindungsstruktur kann den Fräswalzenmantel mit der baugruppenseitigen Lagerformation verbinden. Bevorzugt ist die baugruppenseitige Lagerformation ein Lagerzapfen, welcher auf der vom Antriebsaxialendbereich weg weisenden Seite axial in Richtung vom Antriebsaxialendbereich weg vorsteht. Auf der zum Antriebsaxialendbereich hinweisenden Seite der Verbindungsstruktur kann im Bereich des Lagerzapfens eine Ausnehmung gebildet sein, in welche im Bezugszustand der oben genannte Zentrierzapfen der Stirnseite der Antriebsformation einragt.

Die Arbeitsbaugruppe kann wenigstens eine Sicherungsanordnung umfassen, etwa eine oder mehrere Sicherungsschrauben, mittels welcher die Fräswalze an der Antriebsformation im Bezugszustand gesichert ist. Damit die Fräswalze bestimmungsgemäß lösbar an der Antriebsformation aufgenommen werden kann, ist auch die wenigstens eine Sicherungsanordnung bestimmungsgemäß lösbar an der übrigen Arbeitsbaugruppe aufgenommen. Die Mitnehmerformation kann an der Sicherungsanordnung, insbesondere als Sicherungsschraube, angeordnet oder ausgebildet sein. Sofern die Sicherungsanordnung im Bezugszustand zusätzlich zu einer Sicherungsschraube eine von der Sicherungsschraube an der Antriebsformation oder/und an der Fräswalze festgelegte Unterlegscheibe aufweist, kann die Mitnehmerformation alternativ oder zusätzlich an der Unterlegscheibe angeordnet oder ausgebildet sein.

Um die Anzahl an Bauteilen zur Bildung der Arbeitsbaugruppe gering zu halten, umfasst die Sicherungsanordnung bevorzugt eine Sicherungsschraube, welche in den oben genannten Zentrierzapfen der Antriebsformation derart eingedreht ist, dass ihre Schraubachse im Bezugszustand zur Antriebsachse koaxial ist.

Die Mitnehmergegenformation kann insbesondere dann, wenn die Mitnehmerformation an der Sicherungsanordnung ausgebildet ist, an einem gesondert von der Lagerhülse oder einem Innenring des zweiten Drehlagers ausgebildeten Bauteil ausgebildet sein, welches bevorzugt bestimmungsgemäß lösbar mit der Lagerhülse oder einem Innenring des zweiten Drehlagers verbunden ist.

Im Zweifel sind alle jene Bauteile Teil der Arbeitsbaugruppe, welche ausgehend vom Bezugszustand nach einem Abziehen der Lagerhülse vom Lagerzapfen noch mit der Antriebsformation verbunden sind.

Im Gegensatz zu dem oben diskutierten Fall, dass die Mitnehmerformation und die Mitnehmergegenformation bei Herstellung des Bezugszustands in Umfangsrichtung um die Antriebsachse voneinander einen Abstand aufweisen, kann auch der Fall eintreten, dass die Mitnehmerformation die Mitnehmergegenformation einander bei der Herstellung des Bezugszustands in Umfangsrichtung überlappen. In diesem Falle kann diese Überlappung entweder als körperliche Barriere die Herstellung des Bezugszustands verhindern oder der kraftvolle Versuch einer Herstellung des Bezugszustands kann wenigstens eine der genannten Formationen beschädigen. Um im Überlappungsfall diese nachteiligen Folgen für die Bodenbearbeitungsmaschine bzw. die Tragstruktur zu vermeiden, kann vorgesehen sein, dass die Mitnehmerformation eine im Bezugszustand axial vom Antriebsaxialendbereich wegweisende Justierfläche aufweist und dass die Mitnehmergegenformation eine im Bezugszustand axial zum Antriebsaxialendbereich hinweisende Justiergegenfläche aufweist. Die Justierfläche ist bezüglich einer zur Antriebsachse orthogonalen Bezugsfläche derart geneigt, dass die Justierfläche sich mit längs der zweiten Umfangsrichtung zunehmendem Umfangsabstand von der Mitnehmerfläche dem Antriebsaxialendbereich annähert. Die Justiergegenfläche ist bezüglich der zur Antriebsachse orthogonalen Bezugsfläche derart geneigt, dass die Justiergegenfläche sich mit längs der ersten Umfangsrichtung zunehmendem Umfangsabstand von der Mitnehmergegenfläche vom Antriebsaxialendbereich entfernt. Somit können im oben genannten Überlappungsfall die Mitnehmerformation die Mitnehmergegenformation in Umfangsrichtung längs ihrer Justierfläche und Justiergegenfläche durch Relativdrehung aneinander solange vorbei gleiten, bis eine axiale Annäherung der zweiten Lagerformation an die erste Lagerformation soweit möglich ist, dass der Bezugszustand herstellbar ist. Unter axialem Druck zwingen die Justierfläche und die Justiergegenfläche der Arbeitsbaugruppe und der strukturseitigen Lagerformation eine kurze Schraub-Relativbewegung mit der Antriebsachse als Schraubachse auf.

Dann, wenn die Neigung der Flächen: Justierfläche und Justiergegenfläche, bezüglich der Bezugsfläche betragsmäßig ausreichend groß ist, tritt keine Selbsthemmung ein, sondern die Arbeitsbaugruppe und die strukturseitige Lagerformation werden durch den Vorgang des Verbindens von strukturseitiger und baugruppenseitiger Lagerformation durch axiale Annäherung aneinander relativ zueinander aus der anfänglich bestehenden Überlappungssituation herausbewegt. Hierzu ist es vorteilhaft, wenn die Justierfläche bezüglich der Bezugsfläche um einen Winkel von mindestens 25°, vorzugsweise von mindestens 30° geneigt ist oder/und die Justiergegenfläche bezüglich der Bezugsfläche um einen Winkel von mindestens 25°, vorzugsweise von mindestens 30° geneigt ist. Zur Bereitstellung einer möglichst flächigen Anlage mit niedriger Flächenpressung zwischen der Justierfläche und der Justiergegenfläche sind bevorzugt die Neigungswinkel der Justierfläche und der Justiergegenfläche betragsmäßig gleich groß.

Wie eingangs bereits zum Stand der Technik ausgeführt wurde, ist auch gemäß der vorliegenden Erfindung bevorzugt der zweite Tragstrukturbereich zusammen mit der strukturseitigen Lagerformation ausgehend vom Bezugszustand um eine zur Antriebsachse wenigstens windschiefe, vorzugsweise orthogonale Schwenkachse von der ersten Tragstruktur weg verschwenkbar. Die Schwenkachse verläuft zur Vermeidung von Auswirkungen der Schwerkraft auf eine Schwenkbewegung bevorzugt parallel zu einer sich in Bodenbearbeitungsmaschinenhöhenrichtung erstreckenden Gierachse der Bodenbearbeitungsmaschine. Wenigstens ist die Schwenkachse bevorzugt um nicht mehr als 15° zur Gierachse geneigt. Bevorzugt ist der zweite Tragstrukturbereich als Wartungstüre einer die Arbeitsbaugruppe wenigstens größtenteils umgebenden Hülle, wie etwa ein Fräswalzenkasten, ausgebildet.

Wenngleich die Tragstruktur auf einer Baustelle im Bezugszustand bereitgestellt sein kann, um mit einem Maschinenrahmen einer Bodenbearbeitungsmaschine verbunden zu werden, ist die Tragstruktur im Bezugszustand bevorzugt mit einem solchen Maschinenrahmen verbunden. Die Verbindung der Tragstruktur mit dem Maschinenrahmen ist bevorzugt bestimmungsgemäß lösbar, etwa durch Verschraubung oder/und aktuatorische Verriegelung mittels wenigstens eines aktuatorisch betätigbaren Formschluss-Verriegelungsbauteils, um die Wartung und gegebenenfalls Reparatur der Tragstruktur zu erleichtern. Es kann jedoch die Tragstruktur auch bestimmungsgemäß unlösbar, etwa durch Verschweißen, mit dem Maschinenrahmen verbunden sein.

Die vorliegende Erfindung wird nachfolgend anhand der beiliegenden Figuren näher beschrieben werden. Es stellt dar:
- Figur 1: eine grobschematische Seitenansicht einer erfindungsgemäßen Ausführungsform einer Bodenbearbeitungsmaschine in Form einer Großfräse,
- Figur 2: eine schematische Längsschnittansicht durch die Tragstruktur und Arbeitsbaugruppe der Bodenbearbeitungsmaschine von Figur 1 in einem für eine Bodenbearbeitung betriebsbereiten Zustand, wobei die Schnittebene die Antriebsachse der Arbeitsbautgruppe enthält,
- Figur 3: eine vergrößerte Längsschnitt-Teildarstellung des in Figur 2 rechten Längsendes der eine Antriebsformation und eine Fräswalze umfassenden Arbeitsbaugruppe,
- Figur 4: eine perspektivische Ansicht der Antriebsformation der Figuren 2 und 3,
- Figur 5: eine Draufsicht auf die Antriebsformation von Figur 4 mit Blickrichtung orthogonal zur Antriebsachse,
- Figur 6: eine perspektivische Ansicht eines Übertragungsbauteils mit Mitnehmerformation, in Eingriff mit einer Mitnehmergegenformation an der Lagerhülse von Figur 2 und 3,
- Figur 7: eine Draufsicht auf das Übertragungsbauteil die Lagerhülse von Figur 6 mit Blickrichtung entlang der Maschinenhöhenrichtung, orthogonal zur Antriebsachse, und
- Figur 8: eine perspektivische Ansicht einer Verbindungsstruktur und einer Lagerhülse einer zweiten erfindungsgemäßen Ausführungsform einer Bodenbearbeitungsmaschine bzw. einer Tragstruktur der vorliegenden Anmeldung.

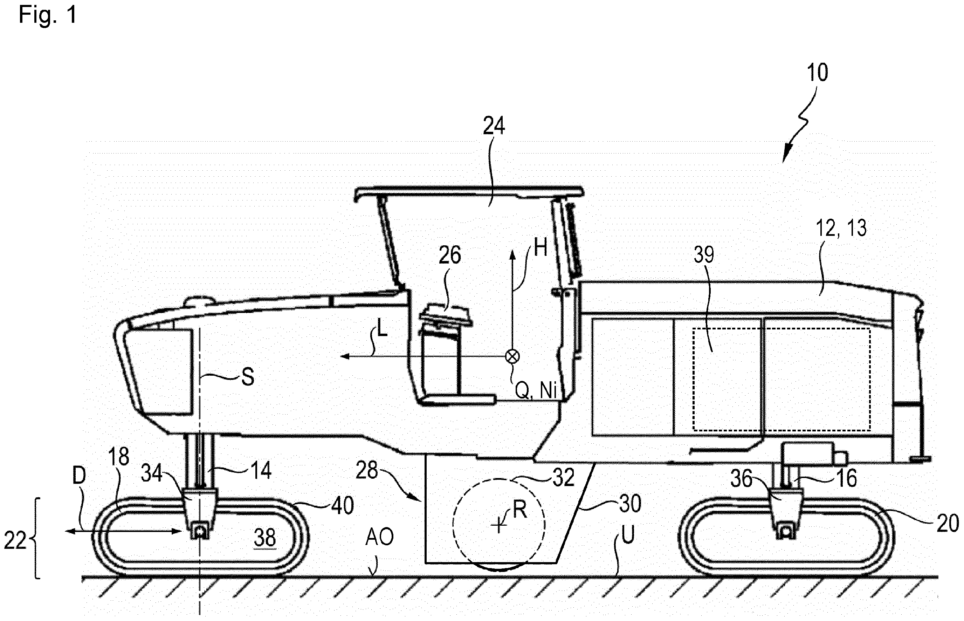

In Figur 1 ist eine erste erfindungsgemäße Ausführungsform einer Bodenbearbeitungsmaschine in Gestalt einer Boden- oder Straßenfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und die mit dem Maschinenrahmen verbundenen, gegebenenfalls relativ zu diesem beweglichen, Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse der Maschine 10, die Maschinenlängsrichtung L verläuft parallel zur Rollachse und die Maschinenquerrichtung Q verläuft parallel zur Nickachse Ni.

Die Bodenbearbeitungsmaschine 10 kann einen Fahrstand 24 aufweisen, von dem aus ein Maschinenführer über ein Schaltpult 26 die Maschine 10 steuern kann.

Unter dem Maschinenrahmen 12 ist eine Arbeitsbaugruppe 28 angeordnet, hier beispielhaft als Fräsbaugruppe, mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung. Der lösbar mit dem Maschinenrahmen 12 verbundene Fräswalzenkasten 30 bildet eine Tragstruktur im Sinne der vorliegenden Anmeldung.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Arbeitsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen weisen üblicherweise ein Transportband auf, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme- und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

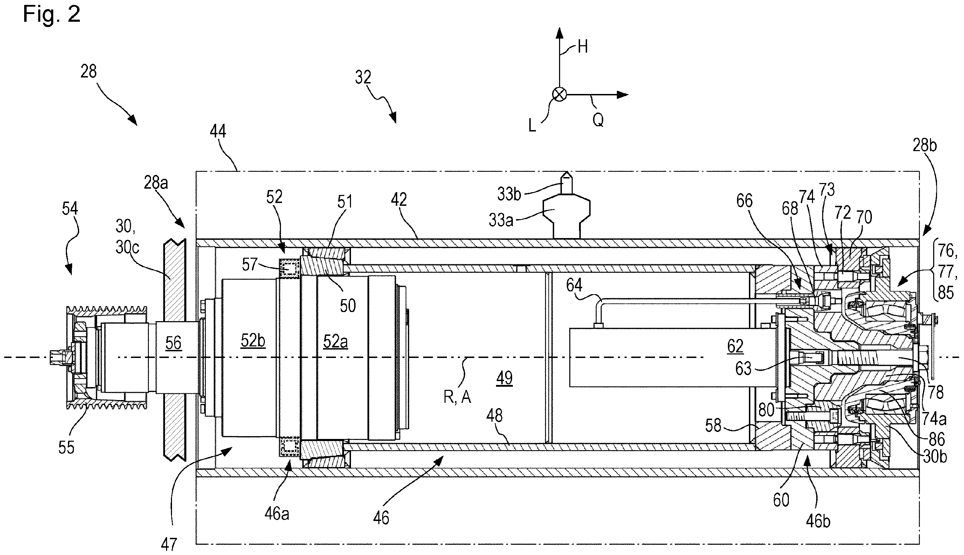

In Figur 2 ist eine Längsschnittansicht der Arbeitsbaugruppe 28 mit der Fräswalze 32 von Figur 1 in einer die Rotationsachse R der Fräswalze enthaltenden Schnittebene gezeigt. Figur 2 zeigt auch Teile des Fräswalzenkastens 30.

Die Fräswalze 32 umfasst ein im Wesentlichen zylindrisches Fräswalzenrohr 42, auf deren radial äußerer Seite in an sich bekannter Weise Meißelhalter oder Meißelwechselhalter 33a mit darin auswechselbar aufgenommenen Fräsmeißeln 33b vorgesehen sind. Von diesen ist zur Veranschaulichung nur jeweils ein Exemplar dargestellt. Eine strichpunktierte Linie 44 gibt den Wirkdurchmesser (Schnittkreis-Zylinder) der Fräswalze 32 an, definiert durch die Fräsmeißelspitzen der Fräsmeißel 33b.

Die Arbeitsbaugruppe 28 umfasst eine Antriebsformation 46 mit einem Innenrohr 48, einem Stützkonus 50 und einem relativ zum Maschinenrahmen 12 drehbaren Teil 52a eines Getriebegehäuses 52. Der Stützkonus 50 und das Innenrohr 48 sind miteinander und als Baugruppe mit dem Getriebegehäuseteil 52a zur gemeinsamen Drehung um die Antriebsachse A der Antriebsformation 46 verbunden. Im Bezugszustand der Arbeitsbaugruppe 28 sind die Antriebsachse A der Antriebsformation 46 und die Rotationsachse R der Fräswalze 32 koaxial.

Die Arbeitsgruppe 28 befindet sich in Fig. 2 in einem zur Drehung um die Antriebsachse A bereiten Bezugszustand. Die Fräswalze 32 ist hierzu mit der Antriebsformation 46 der Arbeitsbaugruppe 28 Drehmoment übertragend verbunden. Die Fräswalze 32 umgibt die Antriebsformation 46 radial außen.

In dem Getriebegehäuse 52 ist ein drehzahluntersetzendes und drehmomentübersetzendes Planetengetriebe aufgenommen. Der gemeinsam mit dem Innenrohr 48 drehbare, in Figur 2 rechte Teil 52a des Getriebegehäuses 52 ist mit einem Hohlrad eines Planetengetriebes zur gemeinsamen Drehung gekoppelt. Ein in Figur 2 linker Teil 52b des Getriebegehäuses 52 ist tragstrukturfest und folglich maschinenrahmenfester Teil des Maschinenkörpers 13.

Das Fräswalzenrohr 42 ist durch einen negativ-konischen Gegenstützkonus 51 am Stützkonus 50 der Antriebsformation 46 abgestützt.

Weiter ist die Antriebsformation 46 mit einer Antriebsdrehmoment-Übertragungsanordnung 54 verbunden, welche im dargestellten Beispiel unter anderem eine Riemenscheibe 55 umfasst. Die Riemenscheibe 55 ist mit einer in Figur 2 nicht dargestellten Eingangswelle des Planetengetriebes im Getriebegehäuse 52 verbunden. Die mit der Riemenscheibe 55 zur gemeinsamen Drehung verbundene Eingangswelle verläuft durch einen im dargestellten Ausführungsbeispiel tragstrukturfesten Wellentunnel 56, welcher mit dem Getriebegehäuseteil 52b starr verbunden ist.

Die Antriebsformation 46 bildet mit der tragstrukturfesten Baugruppe aus Getriebegehäuseteil 52b und Wellentunnel 56 eine Antriebsbaugruppe 47, welche von einem Antriebsaxialendbereich 28a der Arbeitsbaugruppe 28 her axial in die Fräswalze 32 einragt. Bevorzugt überragt die Fräswalze 32 die Antriebsformation 46 als den relativ zum Fräswalzenkasten 30 als der Tragstruktur und folglich zum Maschinenrahmen 12 drehbaren Teil der Antriebsbaugruppe 47 axial zu beiden Seiten.

Die Antriebsbaugruppe 47, und mit ihr die Antriebsformation 46, ist im Bereich des Wellentunnels 56 an einem ersten Tragstrukturbereich 30c des Fräswalzenkastens 30 gelagert. Genauer ist die Antriebsformation 46 mit dem drehbaren Getriebegehäuseteil 52a durch ein zwischen dem drehbaren Getriebegehäuseteil 52a und dem maschinenrahmenfesten Getriebegehäuseteil 52b angeordnetes erstes Drehlager 57 an dem maschinenrahmenfesten Getriebegehäuseteil 52b und damit am ersten Tragstrukturbereich 30c gelagert. Das erste Drehlager 57 ist in Fig. 2 lediglich strichliniert und symbolisch dargestellt. Das erste Drehlager 57 bildet ein Festlager der Antriebsformation 46. Das näher an der Riemenscheibe 55 gelegene axiale Längsende 46a der Antriebsformation 46 ist daher auch als festlagerseitiges Längsende 46a bezeichnet.

Die Fräswalze 32 erstreckt sich axial längs ihrer im betriebsbereiten Zustand mit der Antriebsachse A zusammenfallenden Rotationsachse (Fräsachse) R zwischen dem in Figur 2 der Antriebsdrehmoment-Übertragungsanordnung 54 näher gelegenen Antriebsaxialendbereich 28a und einem dem Antriebsaxialendbereich 28a entgegengesetzten Sicherungsaxialendbereich 28b der Antriebsbaugruppe 28. Im Sicherungsaxialendbereich 28b ist die Fräswalze 32 im Bezugszustand durch eine zentrale Sicherungsschraube 78 an der Antriebsformation 46 positionsgesichert. Die Sicherungsschraube 78 ist Teil der Arbeitsbaugruppe 28.

An dem dem festlagerseitigen Längsende 46a axial entgegengesetzten loslagerseitigen Längsende 46b weist die Antriebsformation 46 einen Tragring 58 und einen mit dem Tragring 58 verbundenen endseitigen Deckel 60 als ein Stirnflächenbauteil der vorliegenden Anmeldung auf. Der Tragring 58 ist im dargestellten Ausführungsbeispiel mit dem Innenrohr 48 verschweißt. Der Deckel 60 kann mit dem Tragring 58 ebenfalls verschweißt oder alternativ verschraubt sein. Er ist mit dem Tragring 58 und dem Innenrohr 48 zur gemeinsamen Drehung um die Antriebsachse A verbunden.

Der Tragring 58 und die radial äußeren Bereiche des Deckels 60 können in unterschiedlicher Art und Weise ausgestaltet sein. Auf ihre Gestalt kommt es nicht wesentlich an. Es ist auch denkbar, den Tragring 58 wegzulassen und den Deckel 60 unmittelbar mit dem Innenrohr 48 zu verbinden, insbesondere zu verschweißen.

In dem in Figur 2 dargestellten Ausführungsbeispiel ist im Inneren 49 der Antriebsformation 46 ein Hydraulikzylinder 62 aufgenommen, welcher mit seiner Hydraulikzylinderachse koaxial zur Antriebsachse A der Antriebsformation 46 angeordnet ist. Der Hydraulikzylinder 62 ist mittels einer Hydraulik-Anschlussleitung 64 durch eine Energie-Durchgangsöffnung 66 im Deckel 60 hindurch mit Hydraulikfluid versorgbar.

Die Hydraulik-Anschlussleitung 64 endet an ihrem vom Hydraulikzylinder 62 fern liegenden Längsende in einer Kupplungsformation 68, welche zur Versorgung des Hydraulikzylinders 62 mit einer Gegenkupplungsformation einer nicht dargestellten Versorgungsleitung verbindbar ist, um die Kolbenstange 63 aus dem Hydraulikzylinder 62 aus- und in diesen wieder einfahren zu können. Zum Betrieb eines bevorzugten doppeltwirkenden Hydraulikzylinders können zwei Hydraulik-Anschlussleitungen 64 vorgesehen sein, für jede Bewegungsrichtung der Kolbenstange 63 eine.

Mit der Kolbenstange 63 kann, nachdem die zur axialen Positionssicherung der Fräswalze 32 an der Antriebsformation 46 vorgesehene zentrale Sicherungsschraube 78 gelöst ist, die Fräswalze 32 zur Demontage von der Antriebsformation 46 axial weggedrückt oder zur Montage auf die Antriebsformation 46 aufgezogen werden.

In einem dem Sicherungsaxialendbereich 28b näher gelegenen Bereich ist radial innen an dem Fräswalzenrohr 42 ein Verbindungsring 70 als angeordnet und zur gemeinsamen Drehung mit dem Fräswalzenrohr 42 verbunden, im dargestellten Beispiel durch eine Schweißverbindung.

Das Fräswalzenrohr 42 ist im Ausführungsbeispiel über den Verbindungsring 70 mittels Schraubbolzen 72 mit einem Verbindungsflansch 74 starr verbunden. Der Verbindungsring 70 und der Verbindungsflansch 74 bilden gemeinsam eine in der Beschreibungseinleitung genannte Verbindungsstruktur 73 der Fräswalze 32.

An dem Verbindungsflansch 74 ist, mit dem Verbindungsflansch 74 verschraubt, verschweißt oder vorzugsweise einstückig mit diesem ausgebildet, ein Lagerzapfen 74a vorgesehen, welcher, von einem Verbindungsbereich des Verbindungsflansches 74 mit dem Verbindungsrohr 70 ausgehend, axial zum Sicherungsaxialendbereich 28b hin, bzw. von Antriebsaxialendbereich 28a weg, auskragt.

Abweichend von dem dargestellten Ausführungsbeispiel kann der Verbindungsflansch bei entsprechender Dimensionierung ohne Verbindungsring unmittelbar mit dem Fräswalzenrohr verbunden, insbesondere verschweißt sein.

Zusätzlich oder alternativ kann abweichend von dem dargestellten Ausführungsbeispiel der Lagerzapfen gesondert vom Verbindungsflansch ausgebildet und an diesen angebaut sein, insbesondere lösbar angeschraubt sein.

An dem Lagerzapfen 74a ist im betriebsbereiten Zustand der Fräswalze 32 ein die Antriebsformation 46 abstützendes und zur Drehung um die Antriebsachse A lagerndes zweites Drehlager 76 zur Bildung eines Loslagers der Drehlagerung angeordnet. Beide Drehlager 57 und 76 sind im dargestellten Ausführungsbeispiel als Wälzlager ausgebildet.

Das zweite Drehlager 76 ist zusammen mit dem Lagerzapfen 74a und einer am Innenring des zweiten Drehlagers 76 angeordneten Lagerhülse 86 Teil einer Drehlageranordnung 77. Der Lagerzapfen 74a ist eine baugruppenseitige Lagerformation und die Lagerhülse 86 ist eine strukturseitige Lagerformation der Drehlageranordnung 77. Das zweite Drehlager 76 bildet mit der Lagerhülse 86 eine im bestimmungsgemäßen Betrieb nur gemeinsam bewegbare Drehlagerbaugruppe 85.

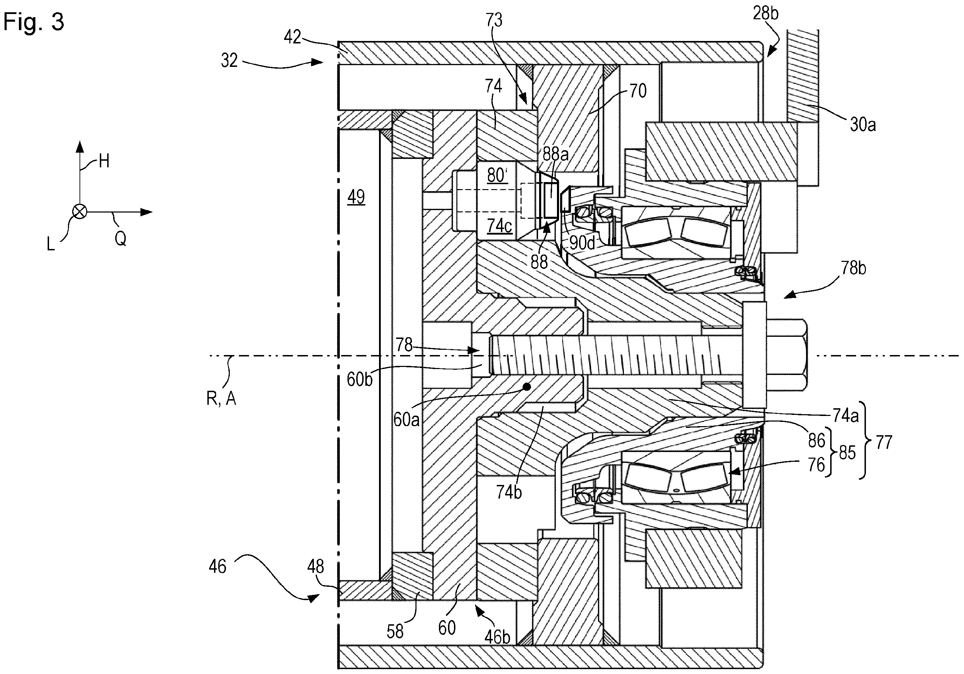

Das zweite Drehlager 76 kann beispielsweise in einer Seitenplatte bzw. Seitentür 30a (s. Figur 3) als einem zweiten Tragstrukturbereich aufgenommen sein. Die Seitentür 30a ist Teil des Fräswalzenkastens 30 und liegt der Fräswalze 32 am Sicherungsaxialendbereich 28b stirnseitig axial gegenüber. In Figur 2 ist lediglich ein mit einer solchen Seitentür 30a als dem zweiten Tragstrukturbereich starr verbundenes Bauteil 30b als Lagerfläche für den äußeren Lagerring des zweiten Drehlagers 76 gezeigt.

Bevorzugt ist die Seitentür 30a schwenkbar am Maschinenrahmen 12 vorgesehen, um durch einfaches Auf- und Zuschwenken die Antriebsformation 46 oder/und die Fräswalze 32 im Inneren des Fräswalzenkastens 30 zugänglich machen zu können. Bevorzugt ist die Seitentür 30a um eine zur Maschinenhöhenrichtung H parallele Schwenkachse schwenkbar, da dann das Schwenken der Seitentür 30a in keinem Schwenksinn gegen die Schwerkraft erfolgen muss. Bevorzugt ist die Drehlagerbaugruppe 85 derart an der Seitentür 30a gelagert, dass die Drehlagerbaugruppe 85 gemeinsam mit der Seitentür 30a verschwenkbar ist. Ein Öffnen der Seitentür 30a zieht dabei die Drehlagerbaugruppe 85, also das zweite Drehlager 76 gemeinsam mit der Lagerhülse 86, axial von dem Lagerzapfen 74a ab.

Bevorzugt ist die Entfernung der Seitentür-Schwenkachse von der Seitentür 30a größer als der Radius des in Figur 2 gezeigten Schnittkreiszylinders der Fräswalze 32, damit die Kreisbahn der Drehlagerbaugruppe 85 beim gemeinsamen Verschwenken mit der Seitentür 30a einen möglichst großen Radius und somit eine möglichst geringe Krümmung aufweist. Dadurch wird das Abziehen bzw. Aufschieben der Drehlagerbaugruppe 85 vom Lagerzapfen 74a bzw. auf diesen Lagerzapfen 74a erleichtert.

In Figur 3 weisen der Tragring 58, der Deckel 60 und der Verbindungsflansch 74 eine von der Darstellung in Figur 2 geringfügig abweichende Gestalt auf. Jedoch unterscheiden sich die Gestalten der genannten Bauteile von der Darstellung in Figur 2 nicht insoweit, als dass diese Unterschiede Einfluss auf die Realisierung der vorliegenden Erfindung hätten.

Der Hydraulikzylinder 62 mit seiner Kolbenstange 63 ist in Figur 3 der Übersichtlichkeit halber weggelassen. Ebenfalls sind die Schraubbolzen 72 zur Verbindung des Verbindungsflansches 74 mit dem Verbindungsring 70 der Übersichtlichkeit halber nicht dargestellt.

Am Deckel 60 ist, vorzugsweise einstückig mit diesem, eine Zentrierformation 60a in Gestalt eines Zentrierzapfens ausgebildet, welcher vom Deckel 60 in Richtung vom festlagerseitigen Längsende 46a der Antriebsformation 46 bzw. vom Antriebsaxialendbereich 28a der Arbeitsbaugruppe 28 weg, zum zweiten Tragstrukturbereich 30a hin absteht. Der Zentrierzapfen 60a ragt in eine als Zentrierausnehmung ausgebildete Gegenzentrierformation 74b am Verbindungsflansch 74 ein und zentriert so das starr mit dem Verbindungsflansch 74 verbundene Fräswalzenrohr 42 bezüglich der Antriebsachse A. Der Deckel 60 weist eine zentrale, ihn axial durchsetzende Ausnehmung 60b auf, welche von der Kolbenstange 63 in Figur 2 axial durchsetzbar ist.

Die Fräswalze 32 ist somit am Gegenabstützkonus 51 und am Verbindungsflansch 74 koaxial zur Antriebsachse A an der Antriebsformation 46 abgestützt.

Auf dem dem Sicherungsaxialendbereich 28b zugewandten Endbereich des Zentrierzapfens 60a ist die Ausnehmung 60b im Zentrierzapfen 60a mit einem Innengewinde versehen, in welches die zentrale Sicherungsschraube 78 eingedreht ist.

In einer alternativen Ausgestaltung kann der Zentrierzapfen 60a den Verbindungsflansch 74 durchsetzen und vom Deckel 60 der Antriebsformation 46 axial auskragen. Dann wäre der Zentrierzapfen 60a die baugruppenseitige Lagerformation.

Ein Schraubenkopf 78b spannt den Lagerzapfen 74a und mit diesem den Verbindungsflansch 74 und wiederum mit diesem den Verbindungsring 70 und das Fräswalzenrohr 42 axial gegen den Stützkonus 50 der Antriebsformation 46.

Somit kann, wenn die Fräswalze 32 axial zwar mit axialer Entfernung von ihrer Betriebsposition, jedoch mit gewisser Vorpositionierung angeordnet wird, etwa derart, dass das vom Tragring 58 fern liegende Längsende des Zentrierzapfens 60a bereits in die Zentrierausnehmung 74b des Verbindungsflansches 74 einragt, die Fräswalze 32 mit der zentralen Sicherungsschraube 78 axial in ihre Betriebsposition bewegt werden. Es ist lediglich darauf zu achten, dass am Deckel 60 mit radialem Abstand von der Antriebsachse A vorgesehene Übertragungsbauteile 80 in beispielhafter Gestalt von Zapfen in hierfür vorgesehene Ausnehmungen 74c des Verbindungsflansches 74 gelangen können, um so den Deckel 60 mit dem Verbindungsflansch 74 zur Übertragung von Drehmoment zwischen der Antriebsformation 46 und der Fräswalze 32 zu koppeln.

Alternativ zum Aufziehen bzw. Aufspannen der Fräswalze 32 auf die Antriebsformation 46 mittels der Sicherungsschraube 78 kann die Fräswalze 32 auch durch die schwenkbare Seitentür 30a auf die Antriebsformation 46 aufgeschoben werden. Während dieses Aufschiebens wird nicht nur die Gegenzentrierformation 74b auf den Zentrierzapfen 60a aufgeschoben, sondern bevorzugt die Drehlagerbaugruppe 85 auf den Lagerzapfen 74a.

Zur Erleichterung des im vorherigen Absatz geschilderten Verbringens der Fräswalze 32 in eine betriebsbereite Position alleine durch Schwenken der Seitentür 30a in ihre in Figur 3 gezeigte Schließstellung, in welcher sie den Fräswalzenkasten 30 verschließt, weist die Bodenbearbeitungsmaschine 10 bevorzugt einen Aktuator auf, welcher ein Verschwenken der Seitentür 30a wenigstens in eine Bewegungsrichtung und wenigstens in einem die Schließstellung enthaltenden Bewegungsbereich unterstützt. Besonders bevorzugt handelt es sich dabei um einen Bewegungsendbereich bei der Bewegung der Seitentür 30a in die Schließstellung. Somit kann die zum Aufschieben der Fräswalze 32 auf die Antriebsformation 46 benötigte Kraft und ebenso die zum Aufschieben der Drehlagerbaugruppe 85 auf den Lagerzapfen 74a benötigte Kraft von dem Aktuator ganz oder wenigstens teilweise aufgebracht werden. Ein solcher Aktuator kann beispielsweise eine oder mehrere Kolben-Zylinder-Anordnungen aufweisen. Dabei ist bevorzugt der Zylinder am Maschinenrahmen 12 angelenkt. Bei ausgefahrener Kolbenstange kann dann, wenn die Seitentür 30a einer Eingriffsformation der Kolbenstange ausreichend angenähert wurde, die Seitentür 30a mit der Eingriffsformation der Kolbenstange in Eingriff gebracht werden, vorzugsweise in einen eine besonders hohe Kraft übertragenden Formschlusseingriff, sodass dann die eine oder mehreren Kolben-Zylinder-Anordnungen die restliche Schließbewegung der Seitentür 30a wenigstens unterstützen, vorzugsweise selbsttätig ausführen.

Bevorzugt kann der Aktuator die Schwenkbewegung der Seitentür 30a gemeinsam mit der Drehlagerbaugruppe 85 auch in einem Bewegungsanfangsbereich der Schwenkbewegung der Seitentür 30a aus der Schließstellung zur Zugangsstellung hin unterstützen oder sogar ausführen, über welchen Bewegungsanfangsbereich hinweg die Drehlagerbaugruppe 85 vom Lagerzapfen 74a abgezogen wird. Der Aktuator kann alternativ oder zusätzlich auch ein elektro-mechanischer Aktuator sein.

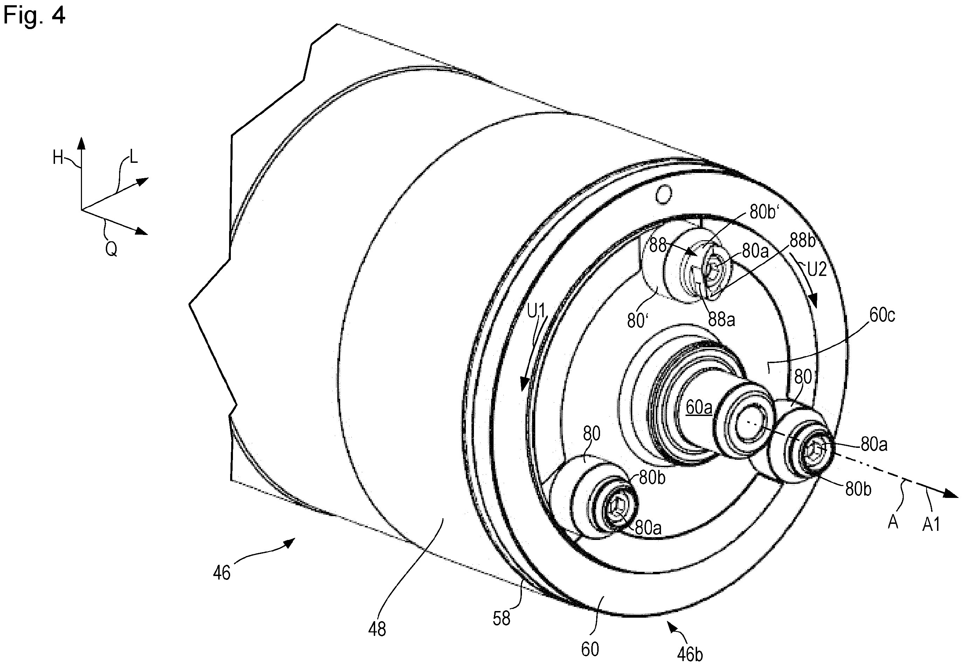

In Figur 4 ist das loslagerseitige Längsende 46b und ein daran anschließender Abschnitt des Innenrohrs 48 der Antriebsformation 46 perspektivisch dargestellt. Die in Figur 2 gezeigte hydraulische Kupplungsformation 68 ist in Fig. 4 an der Stirnfläche 60c der besseren Übersichtlichkeit halber nicht dargestellt.

Der Betrachter von Figur 4 blickt auf die Stirnfläche 60c des Deckels 60, aus dessen Zentrum der Zentrierzapfen 60a auskragt und welcher in radialem Abstand beispielhaft von drei in Umfangsrichtung äquidistant voneinander angeordneten Übertragungsbauteilen 80 umgeben ist. Dabei ist das in Figur 3 obere Übertragungsbauteil an seinem von der Stirnfläche 60c fernliegendem, frei auskragenden Längsende mit einer Mitnehmerformation 88 ausgebildet. Im dargestellten Beispiel ist nur dieses obere Übertragungsbauteil 80' mit einer Mitnehmerformation 88 ausgebildet, weshalb es zur Unterscheidung von den übrigen beiden Übertragungsbauteile 80 mit einem Apostroph als Übertragungsbauteil 80' bezeichnet ist.

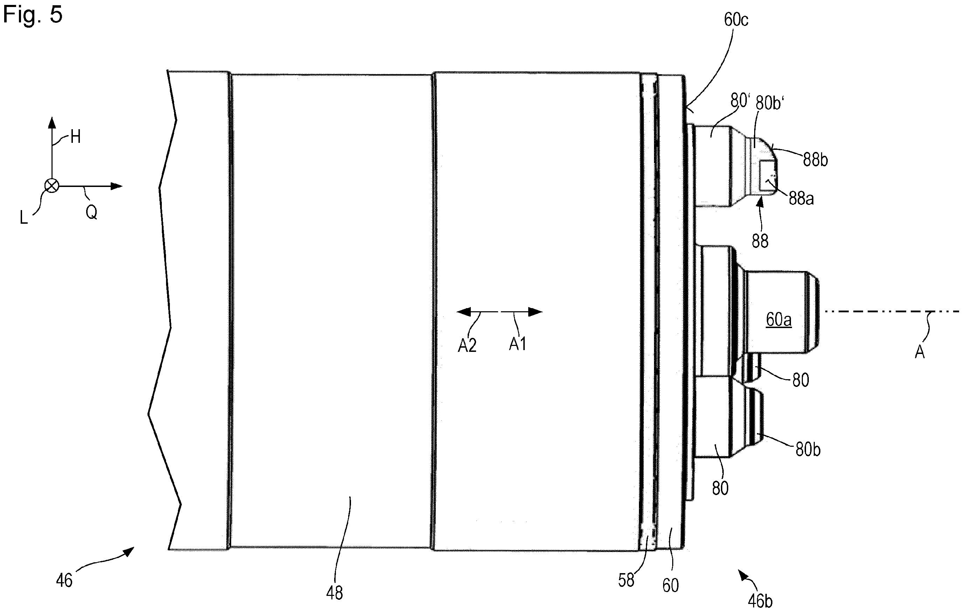

Alle Übertragungsbauteile 80 und 80' sind durch eine sie zentral durchsetzende Schraube 80a am Deckel 60 befestigt. Während ein den Kopf der Schraube 80a umgebender Kragen 80b der unmodifizierten Übertragungsbauteile 80 mit einer zur Antriebsachse A orthogonalen Endfläche enden, kragt das die Mitnehmerformation 88 aufweisende Übertragungsbauteil 80' axial weiter von der Stirnfläche 60c aus, wobei ein Umfangsabschnitt des Befestigungsschraube 80a umgebenden Kragens 80b' als Mitnehmerformation 88 ausgebildet ist (s. a. Figur 5).

Die Antriebsformation 46 ist durch den oben beschriebenen Drehantrieb für eine Boden abtragende Bearbeitung nur in einer Drehrichtung zur Drehung antreibbar, das ist die in Figur 4 mit U1 bezeichnete erste Umfangsrichtung. Die Mitnehmerformation 88 weist eine Mitnehmerfläche 88a auf, im dargestellten Beispiel eine ebene Mitnehmerfläche 88a, welche in die erste Umfangsrichtung U1 weist. Bevorzugt liegt die ebene Mitnehmerfläche 88a in einer Ebene, welche die Antriebsachse A enthält.

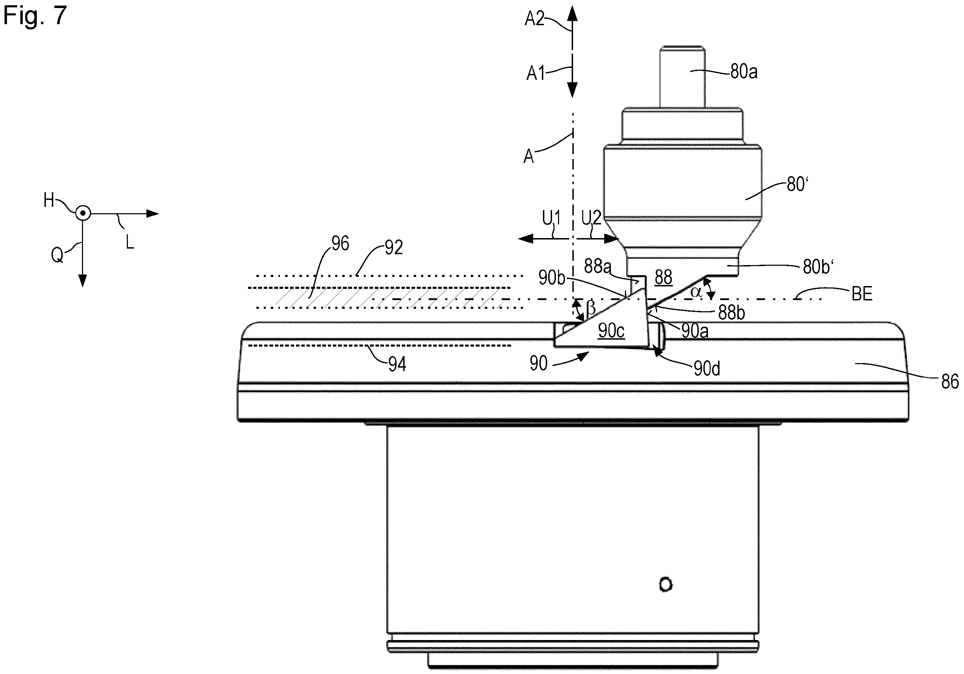

In einer entgegengesetzten zweiten Umfangsrichtung U2 erstreckt sich ausgehend von der Mitnehmerfläche 88a eine hauptsächlich in axiale Richtung weisende Justierfläche 88b, welche, wie in Figur 7 gezeigt ist, bezüglich einer zur Antriebsachse A orthogonalen Bezugsebene BE derart geneigt ist, dass sie sich mit zunehmender Entfernung von der Mitnehmerfläche 88a in der zweiten Umfangsrichtung U2 dem Antriebsaxialendbereich 28a der Arbeitsbaugruppe 28 oder ebenso dem festlagerseitigen Längsendbereich 46a der Antriebsformation 46 axial annähert.

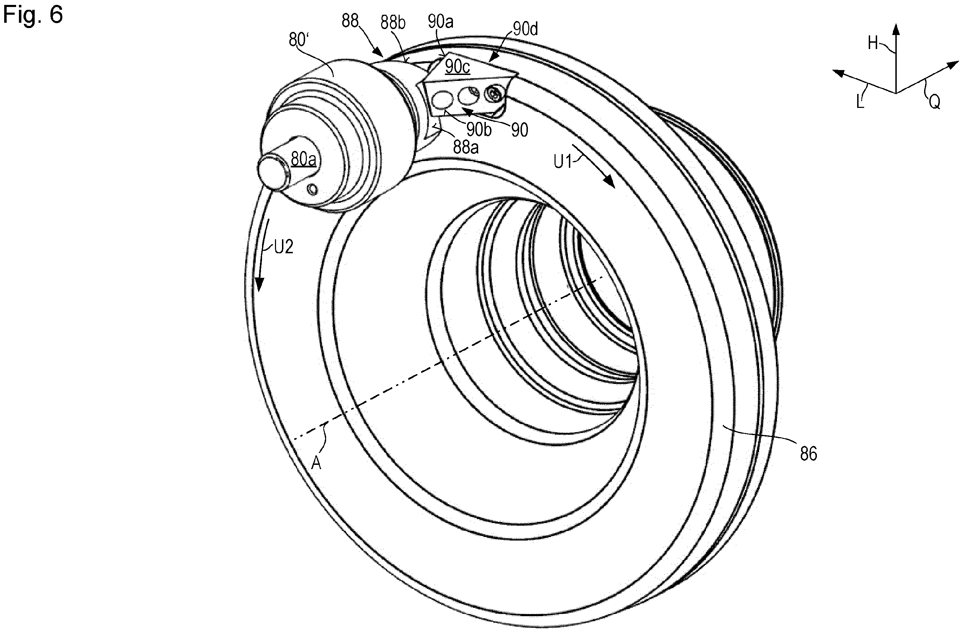

In den Figuren 6 und 7 ist ein Drehmoment übertragender Eingriff der Mitnehmerformation 88 mit einer Mitnehmergegenformation 90 an der Lagerhülse 86 gezeigt. Um den Eingriff von Mitnehmerformation 88 und Mitnehmergegenformation 90 möglichst deutlich zeigen zu können, sind in den Figuren 6 und 7 nur das die Mitnehmerformation 88 aufweisende Übertragungsbauteil 80', dessen Befestigungsschraube 80a, die Mitnehmergegenformation 90 und die sie tragende die Lagerhülse 86 dargestellt. Im Zusammenhang mit den zuvor erläuterten Figuren 2 bis 5 ist jedoch eindeutig klar, wie die in den Figuren 6 und 7 dargestellten Bauteile am Fräswalzenkasten 30 bzw. an der Straßenfräse 10 angeordnet sind.

Die Mitnehmergegenformation 90 weist eine, bevorzugt wiederum ebene, in die zweite Umfangsrichtung U2 weisende Mitnehmergegenfläche 90a auf, welche mit der Mitnehmerfläche 88a in Drehmoment übertragendem Anlageeingriff ist. Ausgehend von der Mitnehmergegenfläche 90a erstreckt sich in die erste Umfangsrichtung U1 eine ebenfalls hauptsächlich in axiale Richtung weisende Justiergegenfläche 90b, welche, wie ebenfalls in Figur 7 zu erkennen ist, gegenüber der Bezugsebene BE derart geneigt ist, dass sie sich mit zunehmender Entfernung von der Mitnehmergegenfläche 90a in der zweiten Umfangsrichtung U2 vom Axialantriebsendbereich 28a der Arbeitsbaugruppe 28 axial ebenso entfernt wie vom festlagerseitigen Längsende 46a der Antriebsbaugruppe 46.

Ebenso wie die Mitnehmerfläche 88a und die Mitnehmergegenfläche 90a beide in Umfangsrichtung, jedoch beide in entgegengesetzte Umfangsrichtungen U1 bzw. U2 weisen, weisen die Justierfläche 88b und die Justiergegenfläche 90b beide in axiale Richtungen, jedoch in entgegengesetzte axiale Richtungen A1 bzw. A2 (siehe Fig. 7).

Die Funktionsflächen der Mitnehmergegenformation 90: Mitnehmergegenfläche 90a und Justiergegenfläche 90b sind an einem Vorsprungsbauteil 90c ausgebildet, welches als gesondertes Bauteil in eine Einsenkung 90d in der Lagerhülse 86 eingesetzt und dort durch beispielhaft drei Schrauben lösbar befestigt ist. Die Einsenkung 90d ist funktioneller Bestandteil der Mitnehmergegenformation 90.

Das von der Mitnehmerformation 88 auf die Mitnehmergegenformation 90 übertragene Drehmoment kann somit sowohl über die Befestigungsschrauben des Vorsprungsbauteils 90c als auch über die Flanken der Einsenkung 90d vom Vorsprungsbauteil 90c auf die Lagerhülse 86 und damit auf die Drehlagerbaugruppe 85 übertragen werden. Außerdem kann durch die Einsenkung 90d eine plane Befestigungsfläche zur Anordnung des Vorsprungsbauteils 90c bereitgestellt werden.

Grundsätzlich kann das Vorsprungsbauteil 90c auch an die Lagerhülse 86 angeschweißt werden. Jedoch ist eine lösbare Befestigung für den Austausch verschlissener Vorsprungsbauteile bevorzugt. Ebenso kann das Übertragungsbauteil 80' im Falle übermäßigen Verschleißes durch Lösen seiner einzigen Befestigungsschraube 80a schnell, einfach und sicher gegen ein unverschlissenes Übertragungsbauteil 80' ersetzt werden.

Auch die ebene Mitnehmergegenfläche 90a ist bevorzugt in einer die Antriebsachse A enthaltenden Ebene gelegen.

Außerdem sind, wie in Figur 7 zu erkennen ist, die Justierfläche 88b und die Justiergegenfläche 90b betragsmäßig um etwa denselben Winkel α bzw. β gegenüber der Bezugsebene BE geneigt, sodass diese Flächen dann, wenn sie in Anlage aneinander gelangen, flächig aneinander anliegen und parallel bzw. komplanar sind.

Bevorzugt betragen die Winkel α und β jeweils wenigstens 25°, besser noch wenigstens 30°, um Selbsthemmung im Falle einer Anlage der Justierfläche 88b und der Justiergegenfläche 90b aneinander zu vermeiden und dafür zu sorgen, dass dann, wenn die Mitnehmerformation 88 und die Mitnehmergegenformation 90 während eines Versuchs, den oben beschriebenen und in den Figuren 2 und 3 gezeigten Bezugszustand herzustellen, einander in Umfangsrichtung nicht nur überlappen, sondern in axialer Richtung aufeinander zu mit Kraft beaufschlagt sind, getrieben durch diese axiale Kraft am Anlageeingriff von Justierfläche 88b und Justiergegenfläche 90b zur Relativdrehung angetrieben werden und während einer axialen Annäherungsbewegung aneinander vorbei gleiten können. So wird die Beschädigung der Mitnehmerformation 88 und der Mitnehmergegenformation 90 im Kollisionsfall verhindert.

In Figur 7 ist mit Bezugszeichen 92 der Bewegungsraum der Mitnehmerfläche 88a dargestellt und ist mit Bezugszeichen 94 der Bewegungsraum der Mitnehmergegenfläche 90a dargestellt. Das sind jene Räume 92 und 94, die die zugeordneten Flächen 88a bzw. 90a während einer Drehung um die Antriebsachse A überstreichen. Der von beiden Bewegungsräumen 92 und 94 gemeinsam eingenommene Überlappungsbereich, in welchem sich die Bewegungsräume 92 und 94 überlappen, ist in Figur 7 abschnittsweise schraffiert dargestellt und mit 96 bezeichnet. Aufgrund dieses Überlappungsbereichs 96 gelangt die Mitnehmerfläche 88a auch dann in Anlageeingriff mit der Mitnehmergegenfläche 90a, wenn die beiden Flächen unmittelbar nach der Herstellung des Bezugszustands in Umfangsrichtung um die Antriebsachse A mit Abstand voneinander angeordnet sind und während eines Bearbeitungsbetriebs eine Relativdrehung zwischen dem Lagerzapfen 74a und der Lagerhülse 86 um die Antriebsachse A auftritt. Wegen der Justierfläche 88b und der Justiergegenfläche 90b kann eine solche Relativdrehung zwischen Lagerzapfen 74a und Lagerhülse 86 jedoch nicht einmal eine Umdrehung betragen.

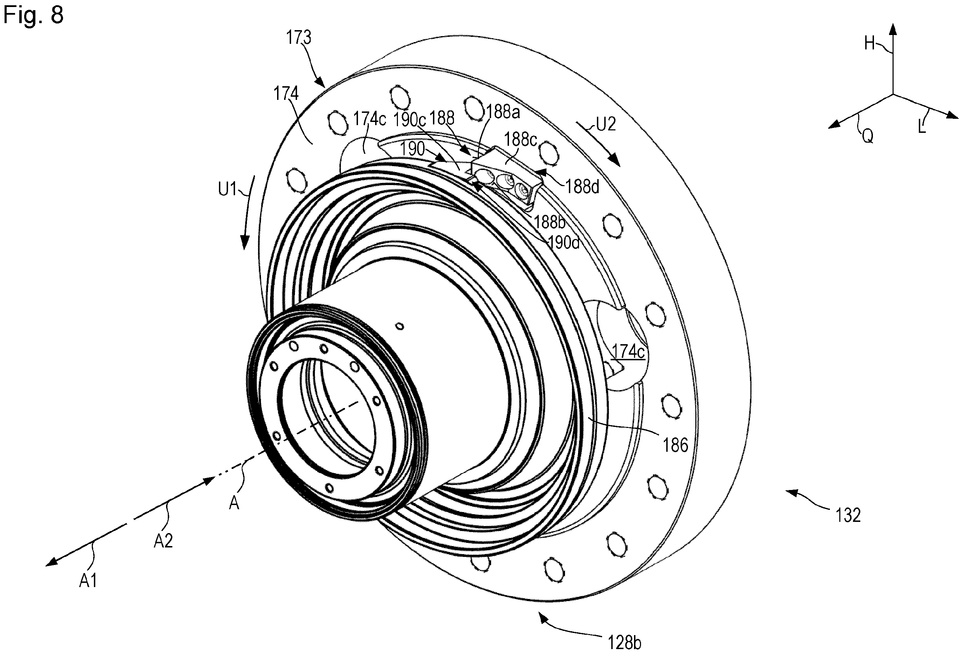

Abweichend von der lediglich beispielhaften Darstellung in den Figuren 4 bis 7 kann die Mitnehmerformation 88 an der Fräswalze, vorzugsweise an der Verbindungsstruktur 73 angeordnet sein. Beispielsweise kann die Mitnehmerformation an dem Verbindungsflansch, etwa in einer Einsenkung, vorzugsweise lösbar angeordnet sein. Eine solche zweite Ausführungsform ist in Figur 8 dargestellt. Gleiche und funktionsgleiche Bauteile und Bauteilabschnitte wie in der ersten Ausführungsform sind in der zweiten Ausführungsform gleichen Bezugszeichen versehen, jedoch erhöht um die Zahl 100. Die zweite Ausführungsform wird nachfolgend nur insofern beschrieben werden, wie sie sich von der ersten Ausführungsform unterscheidet.

In der in Figur 8 gezeigten zweiten Ausführungsform ist die Mitnehmerformation 188 an der Verbindungsstruktur 173 angeordnet. In der Verbindungsstruktur 173 ist der Lagerzapfen als gesondertes Bauteil separat vom Verbindungsflansch 174 ausgebildet. Das gesonderte Lagerzapfen-Bauteil und der Lagerzapfen selbst sind in Figur 8 durch die Lagerhülse 186 verdeckt.

Die Mitnehmerformation 188 umfasst ein Vorsprungsbauteil 188c, an welchem die Mitnehmerfläche 188a sowie die Justierfläche 188b in der oben beschriebenen Art und Weise ausgebildet und ausgerichtet sind, und welches in eine Einsenkung 188d der Mitnehmerformation 188 eingesetzt und dort bestimmungsgemäß lösbar mit Schrauben festgelegt ist. Die Einsenkung 188d ist in eine Stirnfläche des Verbindungsflanschs 174 ausgebildet.

Die Mitnehmergegenformation 190 entspricht der Mitnehmergegenformation 90 der ersten Ausführungsform. Optional können die Vorsprungsbauteile 90c und 188c identisch sein, sodass zur Bildung einer Eingriffsbaugruppe, umfassend eine Mitnehmerformation und eine Mitnehmergegenformation, nur eine einzige Art von Vorsprungsbauteilen gefertigt werden muss.

Die übrige Bodenbearbeitungsmaschine der zweiten Ausführungsform ist gegenüber den Figur 1 gezeigten unverändert.

## Patentansprüche

1. Bodenbearbeitungsmaschine (10), wie etwa Straßenfräse, Recycler, Stabilisierer oder Surface-Miner, umfassend eine Tragstruktur (30) umfassend einen ersten Tragstrukturbereich (30c) und einen zweiten Tragstrukturbereich (30a) und eine zur Bodenbearbeitung um eine Antriebsachse (A) relativ zur Tragstruktur (30) drehbar an der Tragstruktur (30) gelagerte Arbeitsbaugruppe (28), wobei die Antriebsachse (A) eine längs der Antriebsachse (A) verlaufende axiale Richtung (A1, A2), eine orthogonal dazu verlaufende radiale Richtung und eine um die Antriebsachse umlaufende Umfangsrichtung (U1, U2) definiert, wobei in einem für eine Drehung der Arbeitsbaugruppe (28) um die Antriebsachse (A) bereiten Bezugszustand die Arbeitsbaugruppe (28) an einem Antriebsaxialendbereich (28a) mittels eines ersten Drehlagers (57) drehbar an einem ersten Tragstrukturbereich (30c) gelagert ist und an einem in axialer Richtung (A2) vom Antriebsaxialendbereich (28a) entfernt gelegenen Sicherungsaxialendbereich (28b) mittels einer Drehlageranordnung (77) drehbar an einem zweiten Tragstrukturbereich (30a) gelagert ist, wobei die Drehlageranordnung (77) ein zweites Drehlager (76), eine mit der Arbeitsbaugruppe (28) verbundene baugruppenseitige Lagerformation (74a) und eine mit der Tragstruktur (30) verbundene strukturseitige Lagerformation (86) aufweist, wobei der Sicherungsaxialendbereich (28b; 128b) als die baugruppenseitige Lagerformation (74a) eine Formation aus Lagerzapfen (74a) und Lagerhülse (86; 186) aufweist und wobei der zweite Tragstrukturbereich (30a) als die strukturseitige Lagerformation (86; 186) die jeweils andere Formation aus Lagerzapfen (74a) und Lagerhülse (86; 186) aufweist, wobei im Bezugszustand die Lagerhülse (86; 186) den Lagerzapfen (74a) umgibt, wobei sowohl der Lagerzapfen (74a) als auch die Lagerhülse (86; 186) im Bezugszustand relativ zum zweiten Tragstrukturbereich (30a) um die Antriebsachse (A) drehbar angeordnet sind, und wobei der Lagerzapfen (74a) und die Lagerhülse (86; 186) zu Wartungs-, Umrüst- und Montagezwecken bestimmungsgemäß axial voneinander entfernbar und dadurch voneinander trennbar sind,
**dadurch gekennzeichnet, dass** die Arbeitsbaugruppe (28) eine Mitnehmerformation (88; 188) mit einer in einer ersten Umfangsrichtung (U1) weisenden Mitnehmerfläche (88a; 188a) aufweist und dass die strukturseitige Lagerformation (86; 186) eine Mitnehmergegenformation (90; 190) mit einer in einer zur ersten entgegengesetzten zweiten Umfangsrichtung (U2) weisenden Mitnehmergegenfläche (90a) aufweist, wobei sich im Bezugszustand die Bewegungsräume (92, 94) der Mitnehmerfläche (88a; 188a) und der Mitnehmergegenfläche (90a) um die Antriebsachse (A) überlappen.

2. Bodenbearbeitungsmaschine (10) nach Anspruch 1,
**dadurch gekennzeichnet, dass** die Mitnehmerfläche (88a; 188a) und die Mitnehmergegenfläche (90a) sich in einem in Umfangsrichtung (U1, U2) Kraft übertragenden Anlageeingriff befinden.

3. Bodenbearbeitungsmaschine (10) nach Anspruch 1 oder 2,
**dadurch gekennzeichnet, dass** die Mitnehmergegenformation (90; 190) eine Einsenkung (90d; 190d) oder/und einen Vorsprung (90c; 190c) aufweist.

4. Bodenbearbeitungsmaschine (10) nach Anspruch 3,
**dadurch gekennzeichnet, dass** die Mitnehmergegenformation (90; 190) einen Vorsprung (90c; 190c) aufweist, welcher in eine Einsenkung (90d; 190d) in der strukturseitigen Lagerformation (86; 186) eingesetzt und dort bestimmungsgemäß lösbar festgelegt ist.

5. Bodenbearbeitungsmaschine (10) nach einem der vorhergehenden Ansprüche,
**dadurch gekennzeichnet, dass** die Arbeitsbaugruppe (28) eine Antriebsformation (46) aufweist, welche am Antriebsaxialendbereich (28a) mittels des ersten Drehlagers (57) um die Antriebsachse (A) drehbar am ersten Tragstrukturbereich (30c) gelagert ist und vom ersten Tragstrukturbereich (30c) weg axial auskragt, wobei die Antriebsformation (46) die Mitnehmerformation (88) trägt.

6. Bodenbearbeitungsmaschine (10) nach Anspruch 5,
**dadurch gekennzeichnet, dass** die Antriebsformation (46) an ihrem vom ersten Drehlager (57) fernliegenden Längsende (46b) eine in axiale Richtung (A1) weisende Stirnfläche (60c) aufweist, wobei die Stirnfläche (60c) die Mitnehmerformation (88) trägt.

7. Bodenbearbeitungsmaschine (10) nach Anspruch 5 oder 6,
**dadurch gekennzeichnet, dass** die Antriebsformation (46) zur bestimmungsgemäß lösbaren Aufnahme einer Fräswalze (32; 132) ausgebildet ist, wobei die Antriebsformation (46) vorspringende Übertragungsbauteile (80, 80') zur Drehmomentübertragung auf eine an der Antriebsformation (46) angeordnete Fräswalze (32; 132) aufweist, wobei wenigstens eines der Übertragungsbauteile (80') die Mitnehmerformation (88) aufweist.

8. Bodenbearbeitungsmaschine (10) nach einem der Ansprüche 5 bis 7,
**dadurch gekennzeichnet, dass** die Antriebsformation (46) eine im Bezugszustand mit der Antriebsformation (46) koaxiale Fräswalze (32; 132) aufweist, wobei die Fräswalze (32; 132) einen Fräswalzenmantel (42) umfasst, an dessen Außenseite Fräsmeißelhalter (33a) angeordnet sind, welche dazu ausgebildet sind, Fräsmeißel (33b) aufzunehmen, wobei die Fräswalze (32) im Sicherungsaxialendbereich (28b) eine quer zur Antriebsachse (A) verlaufende Verbindungsstruktur (73) aufweist, wobei die von der Antriebsformation (46) getragene Mitnehmerformation (88) sich axial an der Verbindungsstruktur (73; 173) vorbei oder durch die Verbindungsstruktur (73; 173) hindurch erstreckt und so über die Verbindungsstruktur (73; 173) hinaus zur strukturseitigen Lagerformation (86; 186) vorsteht.

9. Bodenbearbeitungsmaschine (10) nach einem der vorhergehenden Ansprüche,
**dadurch gekennzeichnet, dass** die Arbeitsbaugruppe eine Fräswalze (132) aufweist, wobei die Fräswalze (132) einen Fräswalzenmantel umfasst, an dessen Außenseite Fräsmeißelhalter angeordnet sind, welche dazu ausgebildet sind, Fräsmeißel aufzunehmen, wobei Fräswalze (132) die Mitnehmerformation (188) trägt.

10. Bodenbearbeitungsmaschine (10) nach Anspruch 8 oder 9,
**dadurch gekennzeichnet, dass** die Fräswalze (132) im Sicherungsaxialendbereich (128b) eine quer zur Antriebsachse (A) verlaufende Verbindungsstruktur (173) aufweist, welche den Fräswalzenmantel mit der baugruppenseitigen Lagerformation verbindet, wobei die Verbindungsstruktur (173) die Mitnehmerformation (188) trägt.

11. Bodenbearbeitungsmaschine (10) nach einem der vorhergehenden Ansprüche,
**dadurch gekennzeichnet, dass** Mitnehmerformation (88; 188) eine im Bezugszustand axial vom Antriebsaxialendbereich (28a) wegweisende Justierfläche (88b; 188b) aufweist und dass die Mitnehmergegenformation (90; 190) eine im Bezugszustand axial zum Antriebsaxialendbereich (28a) hinweisende Justiergegenfläche (90b) aufweist, wobei die Justierfläche (88b; 188b) bezüglich einer zur Antriebsachse (A) orthogonalen Bezugsfläche (BE) derart geneigt ist, dass die Justierfläche (88b; 188b) sich mit längs der zweiten Umfangsrichtung (U2) zunehmendem Umfangsabstand von der Mitnehmerfläche (88a; 188a) dem Antriebsaxialendbereich (28a) annähert, und wobei die Justiergegenfläche (90b) bezüglich der zur Antriebsachse (A) orthogonalen Bezugsfläche (BE) derart geneigt ist, dass die Justiergegenfläche (90b) sich mit längs der ersten Umfangsrichtung (U1) zunehmendem Umfangsabstand von der Mitnehmergegenfläche (90a) vom Antriebsaxialendbereich (28a) entfernt.

12. Bodenbearbeitungsmaschine (10) nach Anspruch 11,
**dadurch gekennzeichnet, dass** die Justierfläche (88b; 188b) bezüglich der Bezugsfläche (BE) einen Winkel (α) von mindestens 25° geneigt ist oder/und die Justiergegenfläche (90b) bezüglich der Bezugsfläche (BE) einen Winkel (β) von mindestens 25° geneigt ist, wobei bevorzugt die Neigungswinkel (α, β) der Justierfläche (88b; 188b) und der Justiergegenfläche (90b) betragsmäßig gleich groß sind.

13. Bodenbearbeitungsmaschine (10) nach einem der vorhergehenden Ansprüche,
**dadurch gekennzeichnet, dass** der zweite Tragstrukturbereich (30a) mit der strukturseitigen Lagerformation (86; 186) ausgehend vom Bezugszustand um eine zur Antriebsachse (A) wenigstens windschiefe, vorzugsweise orthogonale Schwenkachse von der ersten Tragstruktur (30c) weg verschwenkbar ist.

14. Bodenbearbeitungsmaschine (10) nach einem der vorhergehenden Ansprüche,
**dadurch gekennzeichnet, dass** die Tragstruktur (30) im Bezugszustand mit einem Maschinenrahmen (12) der Bodenbearbeitungsmaschine (10) verbunden ist.

## Claims

1. An earth working machine (10), such as for example a road milling machine, a recycler, a stabilizer or a surface miner, comprising a support structure (30) with a first support structure area (30c) and a second support structure area (30a) and a working assembly (28) mounted on the support structure (30) so as to be rotatable about a drive axis (A) relative to the support structure (30), the drive axis (A) defining an axial direction (A1, A2) running longitudinally with respect to the drive axis (A), a radial direction running orthogonally thereto and a circumferential direction (U1, U2) running about the drive axis, in a reference state ready for a rotation of the working assembly (28) about the drive axis (A), the working assembly (28) being rotatably mounted by a first rotary bearing (57) in a first support structure area (30c) at a drive axial end (28a) and being rotatably mounted by a rotary bearing arrangement (77) in a second support structure area (30a) at a retention axial end (28b) situated remotely from the drive axial end (28a) in the axial direction (A2), the rotary bearing arrangement (77) including a second rotary bearing (76), an assembly-side bearing configuration (74a) connected to the working assembly (28) and a structureside bearing configuration (86) connected to the support structure (30), the retention axial end (28b; 128b) as the assembly-side bearing configuration (74a) having a configuration including one of of a bearing stem (74a) and a bearing sleeve (86; 186) and the second support structure area (30a) as the structureside bearing configuration (86; 186) having the respectively other configuration including the other of of the bearing stem (74a) and the bearing sleeve (86; 186), the bearing sleeve (86; 186) surrounding the bearing stem (74a) in the reference state, both the bearing stem (74a) as well as the bearing sleeve (86; 186) being situated rotatably about the drive axis (A) relative to the second support structure area (30a) in the reference state, and the bearing stem (74a) and the bearing sleeve (86; 186) being designed to be axially removable from one another and thereby separable from one another for maintenance, refitting and assembly purposes, **characterized in that** the working assembly (28) comprises a driver configuration (88; 188) having a driver surface (88a; 188a) facing in a first circumferential direction (U1) and the structure-side bearing configuration (86; 186) comprises a driver counterpart configuration (90; 190) having a driver counterpart surface (90a) facing in a second circumferential direction (U2) opposite to the first, the movement spaces (92, 94) of the driver surface (88a; 188a) and of the driver counterpart surface (90a) about the drive axis (A) overlapping one another in the reference state.

2. The earth working machine (10) as recited in Claim 1,
**characterized in that** the driver surface (88a; 188a) and the driver counterpart surface (90a) are in an abutting engagement that transmits force in the circumferential direction (U1, U2).

3. The earth working machine (10) as recited in Claim 1 or 2,
**characterized in that** the driver counterpart configuration (90; 190) comprises a depression (90d; 190d) and/or a projection (90c; 190c).

4. The earth working machine (10) as recited in Claim 3,
**characterized in that** the driver counterpart configuration (90; 190) comprises a projection (90c; 190c), which is inserted into a depression (90d; 190d) in the structure-side bearing configuration (86; 186) and is fixated there in a manner designed to be releasable.

5. The earth working machine (10) as recited in one of the preceding claims,
**characterized in that** the working assembly (28) comprises a drive configuration (46), which at the drive axial end (28a) is supported in the first support structure area (30c) rotatable about the drive axis (A) via the first rotary bearing (57) and which protrudes axially away from the first support structure area (30c), the drive configuration (46) supporting the driver configuration (88).

6. The earth working machine (10) as recited in Claim 5,
**characterized in that** the drive configuration (46) at its longitudinal end (46b) situated remotely from the first rotary bearing (57) comprises an end face (60c) facing in the axial direction (A1), the end face (60c) supporting the driver configuration (88).

7. The earth working machine (10) as recited in Claim 5 or 6,
**characterized in that** the drive configuration (46) is designed for accommodating a milling drum (32; 132) in a manner designed to be releasable, the drive configuration (46) comprising projecting transmission components (80, 80') for transmitting torque onto a milling drum (32; 132) situated on the drive configuration (46), at least one of the transmission components (80') comprising the driver configuration (88).

8. The earth working machine (10) as recited in one of Claims 5 through 7,
**characterized in that** the drive configuration (46) comprises a milling drum (32; 132) that is coaxial with the drive configuration (46) in the reference state, the milling drum (32; 132) comprising a milling drum tube (42), on the outside of which milling bit holders (33a) are situated, which are designed to accommodate milling bits (33b), the milling drum (32) comprising at the retention axial end (28b) a connecting structure (73) running transverse to the drive axis (A), the driver configuration (88) supported by the drive configuration (46) extending axially past the connecting structure (73; 173) or through the connecting structure (73; 173) and thus protruding beyond the connecting structure (73; 173) to the structure-side bearing configuration (86; 186).

9. The earth working machine (10) as recited in one of the preceding claims,
**characterized in that** the working assembly comprises a milling drum (132), the milling drum (132) comprising a milling drum tube, on the outside of which milling bit holders are situated, which are designed to accommodate milling bits, the milling drum (132) supporting the driver configuration (188).

10. The earth working machine (10) as recited in Claim 8 or 9,
**characterized in that** the milling drum (132) at the retention axial end (128b) comprises a connecting structure (173) running transverse to the drive axis (A), which connects the milling drum tube with the assembly-side bearing configuration, the connecting structure (173) supporting the driver configuration (188).

11. The earth working machine (10) as recited in one of the preceding claims,
**characterized in that** the driver configuration (88; 188) comprises an alignment surface (88b; 188b) facing axially away from the drive axial end (28a) in the reference state and the driver counterpart configuration (90; 190) comprises an alignment counterpart surface (90b) facing axially toward the drive axial end (28a) in the reference state, the alignment surface (88b; 188b) being inclined with respect to a reference surface (BE) that is orthogonal to the drive axis (A) in such a way that the alignment surface (88b; 188b) approaches the drive axial end (28a) with increasing circumferential distance from the driver surface (88a; 188a) along the second circumferential direction (U2), and the alignment counterpart surface (90b) being inclined with respect to the reference surface (BE) that is orthogonal to the drive axis (A) in such a way that the alignment counterpart surface (90b) recedes from the drive axial end (28a) with increasing circumferential distance from the driver counterpart surface (90a) along the first circumferential direction (U1).

12. The earth working machine (10) as recited in Claim 11,
**characterized in that** the alignment surface (88b; 188b) is inclined with respect to the reference surface (BE) at an angle (α) of at least 25° and/or the alignment counterpart surface (90b) is inclined with respect to the reference surface (BE) at an angle (β) of at least 25°, the angles of inclination (α, β) of the alignment surface (88b; 188b) and of the alignment counterpart surface (90b) being preferably equal in terms of absolute value.

13. The earth working machine (10) as recited in one of the preceding claims,
**characterized in that,** starting from the reference state, the second support structure area (30a) together with the structure-side bearing configuration (86; 186) is swivable away from the first support structure (30c) about a swivel axis that is at least inclined, preferably orthogonal, with respect to the drive axis (A).

14. The earth working machine (10) as recited in one of the preceding claims,
**characterized in that**, in the reference state, the support structure (30) is connected to a machine frame (12) of the earth working machine (10).

## Revendications

1. Machine de travail du sol (10), telle qu'une fraiseuse routière, un recycleur, un stabilisateur ou une surfaceuse, comprenant une structure porteuse (30) comprenant une première zone de structure porteuse (30c) et une deuxième zone de structure porteuse (30a) et un module de travail (28) monté sur la structure porteuse (30) de manière à pouvoir tourner autour d'un axe d'entraînement (A) par rapport à la structure porteuse (30) pour le travail du sol, dans lequel l'axe d'entraînement (A) définit une direction axiale (A1, A2) s'étendant le long de l'axe d'entraînement (A), une direction radiale s'étendant orthogonalement à celle-ci et une direction circonférentielle (U1, U2) tournant autour de l'axe d'entraînement, dans lequel dans un état de référence prêt pour une rotation du module de travail (28) autour de l'axe d'entraînement (A), le module de travail (28) est porté de manière rotative sur une première partie de structure porteuse (30c) au niveau d'une partie d'extrémité axiale d'entraînement (28a) au moyen d'un premier palier de rotation (57) et est porté de manière rotative sur une deuxième partie de structure porteuse (30a) au moyen d'un agencement de palier de rotation (77) au niveau d'une partie d'extrémité axiale de sécurité (28b) éloignée de la partie d'extrémité axiale d'entraînement (28a) dans la direction axiale (A2), dans lequel l'agencement de palier de rotation (77) présente un deuxième palier de rotation (76), une formation de palier côté module (74a) reliée au module de travail (28) et une formation de palier côté structure (86) reliée à la structure porteuse (30), dans lequel la zone d'extrémité axiale de sécurité (28b; 128b) présente, en tant que formation de palier côté module (74a), une formation composée de tourillon de palier (74a) et de douille de palier (86; 186), et dans lequel la deuxième zone de structure porteuse (30a) présente, en tant que formation de palier côté structure (86; 186), l'autre formation respective composée de tourillon de palier (74a) et de douille de palier (86; 186), dans lequel dans l'état de référence, la douille de palier (86; 186) entoure le tourillon de palier (74a), dans lequel aussi bien le tourillon de palier (74a) que la douille de palier (86; 186) sont dans l'état de référence disposés, de manière à pouvoir tourner autour de l'axe d'entraînement (A) par rapport à la deuxième zone de structure porteuse (30a), et dans lequel le tourillon de palier (74a) et la douille de palier (86; 186) peuvent être éloignés axialement l'un de l'autre et ainsi séparés l'un de l'autre, conformément à leur définition, à des fins de maintenance, de rééquipement et de montage, **caractérisé en ce que** le module de travail (28) présente une formation d'entraîneur (88; 188) avec une surface d'entraîneur (88a; 188a) orientée dans une première direction circonférentielle (U1) et **en ce que** la formation de palier côté structure (86; 186) présente une contre-formation d'entraîneur (90; 190) avec une contre-surface d'entraîneur (90a) orientée dans une deuxième direction circonférentielle (U2) opposée à la première, dans lequel dans l'état de référence les espaces de déplacement (92, 94) de la surface d'entraîneur (88a; 188a) et de la contre-surface d'entraîneur (90a) se chevauchent autour de l'axe d'entraînement (A).

2. Machine de travail du sol (10) selon la revendication 1,
**caractérisée en ce que** la surface d'entraîneur (88a; 188a) et la contre-surface d'entraîneur (90a) se trouvent dans un engagement d'appui transmettant une force dans la direction circonférentielle (U1, U2).

3. Machine de travail du sol (10) selon la revendication 1 ou 2,
**caractérisé en ce que** la contre-formation d'entraîneur (90; 190) présente un enfoncement (90d; 190d) ou/et une saillie (90c; 190c).

4. Machine de travail du sol (10) selon la revendication 3,
**caractérisé en ce que** la contre-formation d'entraîneur (90; 190) présente une saillie (90c; 190c), qui est insérée dans un enfoncement (90d; 190d) dans la formation de palier côté structure (86; 186) et y est fixée de manière amovible conformément à sa définition.

5. Machine de travail du sol (10) selon l'une des revendications précédentes, **caractérisé en ce que** le module de travail (28) comprend une formation d'entraînement (46) qui est montée sur la première zone de structure porteuse (30c) au niveau de la zone d'extrémité axiale d'entraînement (28a) au moyen du premier palier de rotation (57) de manière à pouvoir tourner autour de l'axe d'entraînement (A) et qui est en porte-à-faux axial par rapport à la première zone de structure porteuse (30c), dans lequel la formation d'entraînement (46) porte la formation d'entraîneur (88).

6. Machine de travail du sol (10) selon la revendication 5,
**caractérisé en ce que** la formation d'entraînement (46) présente, à son extrémité longitudinale (46b) éloignée du premier palier de rotation (57), une surface frontale (60c) orientée dans la direction axiale (A1), dans lequel la surface frontale (60c) porte la formation d'entraîneur (88).

7. Machine de travail du sol (10) selon la revendication 5 ou 6,
**caractérisé en ce que** la formation d'entraînement (46) est adaptée pour recevoir de manière amovible conformément à la définition un tambour de fraisage (32; 132), dans lequel la formation d'entraînement (46) présente des éléments de transmission (80, 80') en saillie pour la transmission du couple à un tambour de fraisage (32; 132) disposé sur la formation d'entraînement (46), dans lequel au moins l'un des éléments de transmission (80') présente la formation d'entraîneur (88).

8. Machine de travail du sol (10) selon l'une des revendications 5 à 7,
**caractérisé en ce que** la formation d'entraînement (46) comprend un tambour de fraisage (32; 132) coaxial à la formation d'entraînement (46) dans l'état de référence, dans lequel le tambour de fraisage (32; 132) comprend une enveloppe de tambour de fraisage (42) sur le côté extérieur de laquelle sont disposés des porte-outils de fraisage (33a) qui sont adaptés pour recevoir des outils de fraisage (33b), dans lequel le tambour de fraisage (32) présente dans la zone d'extrémité axiale de sécurité (28b) une structure de liaison (73) s'étendant transversalement à l'axe d'entraînement (A), dans lequel la formation d'entraîneur (88) portée par la formation d'entraînement (46) s'étend axialement le long de la structure de liaison (73; 173) ou à travers la structure de liaison (73; 173) et fait ainsi saillie au-delà de la structure de liaison (73; 173) vers la formation de palier côté structure (86; 186).

9. Machine de travail du sol (10) selon l'une des revendications précédentes, **caractérisé en ce que** le module de travail comprend un tambour de fraisage (132), dans lequel le tambour de fraisage (132) comprend une enveloppe de tambour de fraisage sur l'extérieur de laquelle sont disposés des porte-outils de fraisage qui sont adaptés pour recevoir des outils de fraisage, dans lequel le tambour de fraisage (132) porte la formation d'entraîneur (188).

10. Machine de travail du sol (10) selon la revendication 8 ou 9,
**caractérisé en ce que** le tambour de fraisage (132) présente dans la zone d'extrémité axiale de sécurité (128b) une structure de liaison (173) s'étendant transversalement à l'axe d'entraînement (A), qui relie l'enveloppe du tambour de fraisage à la formation de palier côté module, dans lequel la structure de liaison (173) porte la formation d'entraîneur (188).

11. Machine de travail du sol (10) selon l'une des revendications précédentes, **caractérisé en ce que** la formation d'entraîneur (88; 188) présente une surface d'ajustement (88b; 188b) qui, dans l'état de référence, s'éloigne axialement de la zone d'extrémité axiale d'entraînement (28a) et **en ce que** la contre-formation d'entraîneur (90; 190) présente une contre-surface d'ajustement (90b) orientée dans l'état de référence axialement vers la zone d'extrémité axiale d'entraînement (28a), dans lequel la surface d'ajustement (88b; 188b) est inclinée par rapport à une surface de référence (BE) orthogonale à l'axe d'entraînement (A) de telle sorte que la surface d'ajustement (88b; 188b) se rapproche de la zone d'extrémité axiale d'entraînement (28a) avec une distance circonférentielle de la surface d'entraîneur (88a; 188a) qui augmente le long de la deuxième direction circonférentielle (U2), et dans lequel la contre-surface d'ajustement (90b) est inclinée par rapport à la surface de référence (BE) orthogonale à l'axe d'entraînement (A) de telle sorte que la contre-surface d'ajustement (90b) s'éloigne de la zone d'extrémité axiale d'entraînement (28a) avec une distance circonférentielle de la contre-surface d'entraînement (90a) qui augmente le long de la première direction circonférentielle (U1).

12. Machine de travail du sol (10) selon la revendication 11,
**caractérisé en ce que** la surface d'ajustement (88b; 188b) est inclinée d'un angle (α) d'au moins 25° par rapport à la surface de référence (BE) ou/et la contre-surface d'ajustement (90b) est inclinée d'un angle (β) d'au moins 25° par rapport à la surface de référence (BE), dans lequel de préférence les angles d'inclinaison (α, β) de la surface d'ajustement (88b; 188b) et de la contre-surface d'ajustement (90b) sont égaux en valeur absolue.

13. Machine de travail du sol (10) selon l'une des revendications précédentes, **caractérisé en ce que** la deuxième zone de structure porteuse (30a) avec la formation de palier (86; 186) côté structure peut pivoter à partir de l'état de référence autour d'un axe de pivotement au moins décalé en angle par rapport à l'axe d'entraînement (A), de préférence orthogonal, pour s'éloigner de la première structure porteuse (30c).

14. Machine de travail du sol (10) selon l'une des revendications précédentes, **caractérisé en ce que** la structure porteuse (30) est reliée, dans l'état de référence, à un châssis de machine (12) de la machine de travail du sol (10).
